# EUROPEAN PATENT APPLICATION

(11) **EP 4 819 718 A1**
(43) Date of publication of application: **07.10.2026**
(21) Application number: 23959679.4
(22) Date of filing: 27.11.2023
(51) Int. Cl.: H04W 72/0446

(54) **UPLINK TRANSMISSION PROCESSING METHODS, COMMUNICATION DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/134429
(87) International publication number: WO 2025/111753

(57) **Abstract**

Provided in the embodiments of the present disclosure are uplink transmission processing methods, a communication device, and a storage medium. The uplink transmission processing method executed by a network device comprises: sending a first uplink transmission on a UL sub-band of an SBFD time unit.

## Description

### TECHNICAL FIELD

The present disclosure relates to the field of communication technology, and specifically to an uplink transmission processing method, a communication device and a storage medium.

### BACKGROUND

Configured Grant (CG) resources are resources configured by a network device through CG configurations. Normally, the CG configurations can be divided into two types, namely type 1 and type 2. The CG resources corresponding to the CG configuration of type 1 can be directly activated after being configured by a Radio Resource Control (RRC) signaling, without the need for additional signaling for activation. The CG resources corresponding to the CG configuration of type 2 need to be activated by other signaling after being configured by the RRC signaling.

### SUMMARY

According to a first aspect of embodiments of the present disclosure, an uplink transmission processing method is provided. The method is performed by a terminal, and includes:
sending a first uplink transmission on an uplink (UL) subband of a subband full duplex (SBFD) time unit.

According to a second aspect of embodiments of the present disclosure, an uplink transmission processing method is provided. The method is performed by a network device, and includes: sending a first uplink transmission on a UL subband of a SBFD time unit.

According to a third aspect of embodiments of the present disclosure, a terminal is provided, including: a sending module, configured to send a first uplink transmission on a UL subband of a SBFD time unit.

According to a fourth aspect of embodiments of the present disclosure, a network device is provided, including: a receiving module, configured to receive a first uplink transmission on a UL subband of a SBFD time unit.

According to a fifth aspect of embodiments of the present disclosure, a communication device is provided. The communication device includes one or more processors;
wherein, the processor is configured to invoke instructions to cause the communication device to implement the uplink transmission processing method provided by any technical solution in the first aspect and/or the second aspect.

According to a sixth aspect of embodiments of the present disclosure, a storage medium is provided. The storage medium stores instructions that, when executed on a communication device, cause the communication device to implement the uplink transmission processing method provided in any of the first aspect and/or the second aspect.

With the technical solution provided in embodiments of the present disclosure, the first uplink transmission is sent on the UL subband of the SBFD time unit. When the transmission occasion of the first uplink transmission is configured on the DL subband of the Downlink (DL) time unit or the DL subband of the flexible (F) time unit, this can reduce the transmission delay, compared to directly ignoring the corresponding transmission occasion.

It should be understood that the above general description and the subsequent detailed description are only exemplary and explanatory, and cannot limit embodiments of the present disclosure.

### BRIEF DESCRIPTION OF THE DRAWINGS

The accompanying drawings are incorporated into the specification and form a part of the specification, illustrating embodiments in accordance with the present application and used together with the specification to explain the principles of embodiments of the present disclosure.
FIG. 1A is a schematic diagram of an architecture of a communication system according to an illustrative embodiment.
FIG. 1B is a schematic diagram of a SBFD time unit according to an illustrative embodiment.
FIG. 1C is a schematic diagram of a CG resource according to an illustrative embodiment.
FIG. 2 is a schematic flowchart of an uplink transmission processing method according to an illustrative embodiment.
FIG. 3 is a schematic diagram of performing uplink transmission of a configured CG resource using a DL slot and an F slot according to an illustrative embodiment.
FIG. 4 is a schematic diagram of performing uplink transmission of a configured CG resource using a DL slot and an F slot through frequency shift according to an illustrative embodiment.
FIG. 5 is a schematic flowchart of an uplink transmission processing method according to an illustrative embodiment.
FIG. 6 is a schematic flowchart of an uplink transmission processing method according to an illustrative embodiment.
FIG. 7A is a schematic diagram of performing uplink transmission of a configured CG resource using a UL subband of a DL slot and an F slot through frequency shift according to an illustrative embodiment.
FIG. 7B is a schematic diagram of performing uplink transmission of a configured CG resource using a UL subband of a DL slot and an F slot through frequency shift according to an illustrative embodiment.
FIG. 8A is a schematic diagram of CG resources according to an illustrative embodiment.
FIG. 8B is a schematic diagram of performing uplink transmission of a configured CG resource using a DL slot and an F slot according to an illustrative embodiment.
FIG. 8C is a schematic diagram of performing uplink transmission of a configured CG resource using a UL subband of a DL slot and an F slot through frequency shift according to an illustrative embodiment.
FIG. 9A is a block diagram of a terminal according to an illustrative embodiment.
FIG. 9B is a block diagram of a network device according to an illustrative embodiment.
FIG. 10A is a block diagram of a communication device according to an illustrative embodiment.
FIG. 10B is a block diagram of a chip according to an illustrative embodiment.

### DETAILED DESCRIPTION

Embodiments of the present disclosure provide an uplink transmission processing method, a communication device and a storage medium.

In a first aspect, embodiments of the present disclosure provide an uplink transmission processing method. The method is performed by a terminal and includes:
sending a first uplink transmission on a UL subband of a SBFD time unit.

In the above embodiment, the terminal uses the UL subband of the SBFD time unit to transmit the first uplink transmission, which can reduce the transmission delay of the first uplink transmission.

In combination with some embodiments of the first aspect, in some embodiments, the first uplink transmission includes at least one of: an uplink transmission corresponding to a configured grant (CG) configuration; or a transmission block (TB) uplink transmission over multiple slots.

The above solution specifies that the first uplink transmission may include the uplink transmission of the CG configuration and cross-slot uplink transmissions of the TB. Since the uplink transmission of the CG configuration involves multiple transmission occasions periodically distributed or the transmission of one TB spans multiple continuously distributed slots, sending the first uplink transmission on the UL subband of the SBFD time unit can reduce the phenomenon of transmission occasions being overlooked due to the configuration of DL slots and F slots in the TDD (Time Division Duplex) system.

In combination with some embodiments of the first aspect, in some embodiments, one CG configuration corresponds to one CG occasion or a plurality of periodically distributed CG occasions, one CG occasion is configured on one slot; or one CG configuration corresponds to one CG occasion or a plurality of periodically distributed CG occasions, one CG occasion is configured on a plurality of continuously distributed slots; or one CG configuration corresponds to one CG occasion or a plurality of periodically distributed CG occasions, different CG occasions are configured on different slots, and the plurality of CG occasions are configured on a plurality of continuously distributed slots.

In the above embodiments, several optional implementations for the CG configuration are provided, which are allowed to use the UL subband of the SBFD time units for transmission, which can significantly improve the timeliness of the first uplink transmission corresponding to the CG configuration.

In combination with some embodiments of the first aspect, in some embodiments, the uplink transmission corresponding to the CG configuration includes an uplink grant (ULgrant) transmission for extended reality (XR).

Based on the above solution, the UL grant for XR also allows the use of the UL subband of the SBFD time units to send uplink data for XR services, which can reduce the transmission delay of XR.

In combination with some embodiments of the first aspect, in some embodiments, the SBFD time unit includes at least one of: a downlink (DL) time unit configured with the UL subband; or a flexible (F) time unit configured with the UL subband.

In the above embodiments, the SBFD time unit may include the DL time unit configured with the UL subband and the F time unit configured with the UL subband, so that uplink and downlink transmission can be simultaneously achieved in different subbands of the DL time unit and the F time unit.

In combination with some embodiments of the first aspect, in some embodiments, sending the first uplink transmission on the UL subband of the SBFD time unit includes at least one of: in a case where a transmission occasion of the first uplink transmission is located within the UL subband of the SBFD time unit, sending the first uplink transmission at the transmission occasion; or in a case where a transmission occasion of the first uplink transmission is located outside the UL subband of the SBFD time unit, shifting the transmission occasion in a frequency domain to a first position within the UL subband, and sending the first uplink transmission at the first position within the UL subband.

In the above solution, it is determined whether frequency shift is needed based on where the transmission occasion of the first uplink transmission is originally located with respect to the SBFD time unit, in order to use the UL subband of the SBFD time unit as much as possible to send the first uplink transmission.

In combination with some embodiments of the first aspect, in some embodiments, before sending the first uplink transmission, the method further includes: receiving first information sent by a network device; wherein the first information is at least configured to determine whether to send the first uplink transmission on the UL subband of the SBFD time unit.

In the above solution, the first information sent by the network device is received, and based on the first information, it is determined whether to use the UL subband of the SBFD time unit to send the first uplink transmission, achieving resource control of the SBFD time unit by the network device.

In combination with some embodiments of the first aspect, in some embodiments, the first information includes at least one of: a first indication, configured to indicate whether the UL subband of the SBFD time unit can be used to send the first uplink transmission; or a second indication, configured to indicate a frequency domain offset; wherein the frequency domain offset is configured for the terminal to shift the transmission occasion in the frequency domain when the terminal uses the UL subband of the SBFD time unit to send the first uplink transmission.

Based on the above solution, the first information includes the first indication and/or the second indication, and the terminal will determine whether to use the UL subband of the SBFD time unit to send the first uplink transmission based on the first indication and the second indication.

In combination with some embodiments of the first aspect, in some embodiments, the first indication corresponds to a bit map; one bit in the bit map is associated with at least one uplink transmission configuration of the first uplink transmission.

Setting the first indication as a bit bitmap can save bit overhead as much as possible.

In combination with some embodiments of the first aspect, in some embodiments, the uplink transmission configuration includes a CG configuration; one bit in the bitmap is associated with an index of one CG configuration.

Based on the above solution, the uplink transmission configuration of the first uplink transmission is the CG configuration. In this way, by associating each bit of the bit map with the index of the CG configuration, it is possible to determine whether to use the UL subband of the SBFD time unit to send the first uplink transmission.

In combination with some embodiments of the first aspect, in some embodiments, the index of the CG configuration includes: a first index, wherein one first index is applied to one bandwidth part (BWP); a second index, wherein one second index is applied to a media access control (MAC) entity.

Based on the above solution, the index of the CG configuration includes the first index and the second index. In this way, the correlation between the bit in the bit map and the index of the CG configuration can be achieved, and it can be determined whether the transmission occasion of the corresponding CG configuration can use the UL subband of the SBFD time unit for transmission.

In combination with some embodiments of the first aspect, in some embodiments, bits of the bit map from high to low correspond to indexes of the CG configurations from small to large; or the bits of the bitmap from high to low correspond to the indexes of the CG configurations from large to small.

The bit bitmap is mapped to the index of the CG configuration using the above method, which has the characteristic of simple implementation.

In combination with some embodiments of the first aspect, in some embodiments, the uplink transmission configuration includes at least one of: a TB cross-slot PUCCH transmission configuration; or a TB cross-slot PUSCH transmission configuration.

Based on the above solution, the efficiency of the TB cross-slot transmission (TB transmission over multiple slots) can be improved.

In combination with some embodiments of the first aspect, in some embodiments, one bit in the bit map is associated with respective uplink transmission configurations of one BWP; or one bit in the bit map is associated with respective uplink transmission configurations of one serving cell; or one bit in the bit map is associated with respective uplink transmission configurations of one cell group; or one bit in the bit map is associated with one uplink transmission configuration.

Based on the above solution, one bit in the bit map can be associated with uplink transmission configurations at different levels, allowing or not allowing the first uplink transmission at different levels to be sent using the UL subband of the SBFD time unit.

In combination with some embodiments of the first aspect, in some embodiments, in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration; in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

The above provides a convenient bit setting for the bit map.

In combination with some embodiments of the first aspect, in some embodiments, the first indication includes: a BWP identifier, configured to indicate that the first uplink transmission associated with the BWP identifier can be sent using the UL subband of the SBFD time unit; a cell identifier, configured to indicate that the first uplink transmission associated with the cell identifier can be sent using the UL subband of the SBFD time unit.

Based on the above solution, it can be seen that there are many forms of the first indication, not limited to the bit map.

In combination with some embodiments of the first aspect, in some embodiments, the second indication corresponds to a first list; the first list includes one or more frequency offsets.

Based on the above solution, the second indication can correspond to the first list, and the frequency offset can be easily indicated through the list.

In combination with some embodiments of the first aspect, in some embodiments, one frequency offset is associated with an index of one CG configuration; or one frequency offset is associated with respective CG configurations of one BWP; or one frequency offset is associated with respective CG configurations of one serving cell; or one frequency offset is associated with respective CG configurations of one cell group.

Based on the above solution, the association between one frequency offset and CG configurations at different levels is realized, so as to meet different transmission requirements under different network states.

In combination with some embodiments of the first aspect, in some embodiments, in a case where the first list is associated with CG configurations of one BWP, the frequency offset associated with the m-th CG configuration in the first list is related to an index of the m-th CG configuration; or
in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or
in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

The above solution provides a specific implementation for the correspondence between the frequency offset in the first list and the CG configuration, which has the characteristic of simple implementation.

In combination with some embodiments of the first aspect, in some embodiments, one frequency offset is associated with one TB cross-slot PUCCH transmission configuration; or one frequency offset is associated with one TB cross-slot PUSCH transmission configuration.

In combination with some embodiments of the first aspect, in some embodiments, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

In combination with some embodiments of the first aspect, in some embodiments, the first information is carried in a Radio Resource Control (RRC) signaling; the RRC signaling is used to configure the first uplink transmission; or the first information is carried in a media access control-control element (MAC CE); or the first information is carried in downlink control information (DCI).

In combination with some embodiments of the first aspect, in some embodiments, the first information is carried in any information element (IE) of:
ConfiguredGrantConfig IE; BWP-UplinkDedicated IE; CellGroupConfig IE; MAC-CellGroupConfig IE; ServingCellConfig IE; PUSCH-Config IE; PUCCH-Config IE; DMRS-BundlingPUSCH-Config IE; DMRS-BundlingPUCCH-Config IE.

The IE in the related art is used to carry the first information, which has strong compatibility.

In a second aspect, an uplink transmission processing method is provided. The method is performed by a network device, and includes: receiving a first uplink transmission on an uplink (UL) subband of a subband full duplex (SBFD) time unit.

In combination with some embodiments of the second aspect, in some embodiments, the first uplink transmission includes at least one of: an uplink transmission corresponding to a configured grant (CG) configuration; or a transmission block (TB) uplink transmission over multiple slots.

In combination with some embodiments of the second aspect, in some embodiments, one CG configuration corresponds to one CG occasion or a plurality of periodically distributed CG occasions, one CG occasion is configured on one slot; or one CG configuration corresponds to one CG occasion or a plurality of periodically distributed CG occasions, one CG occasion is configured on a plurality of continuously distributed slots; or one CG configuration corresponds to one CG occasion or a plurality of periodically distributed CG occasions, different CG occasions are configured on different slots, and the plurality of CG occasions are configured on a plurality of continuously distributed slots.

In combination with some embodiments of the second aspect, in some embodiments, the uplink transmission corresponding to the CG configuration includes an uplink grant (ULgrant) transmission for extended reality (XR).

In combination with some embodiments of the second aspect, in some embodiments, the SBFD time unit includes at least one of: a downlink (DL) time unit configured with the UL subband; or a flexible (F) time unit configured with the UL subband.

In combination with some embodiments of the second aspect, in some embodiments, receiving the first uplink transmission on the UL subband of the SBFD time unit includes at least one of: in a case where a transmission occasion of the first uplink transmission is located within the UL subband of the SBFD time unit, receiving the first uplink transmission at the transmission occasion; or, in a case where a transmission occasion of the first uplink transmission is located outside the UL subband of the SBFD time unit, shifting the transmission occasion in a frequency domain to a first position within the UL subband, and receiving the first uplink transmission at the first position within the UL subband.

In combination with some embodiments of the second aspect, in some embodiments, before receiving the first uplink transmission, the method further includes: sending first information to a terminal; wherein the first information is at least configured to determine whether to send the first uplink transmission on the UL subband of the SBFD time unit.

In combination with some embodiments of the second aspect, in some embodiments, the first information includes at least one of: a first indication, configured to indicate whether the UL subband of the SBFD time unit can be used to send the first uplink transmission; or a second indication, configured to indicate a frequency domain offset.

In combination with some embodiments of the second aspect, in some embodiments, the first indication corresponds to a bit map; one bit in the bit map is associated with at least one uplink transmission configuration of the first uplink transmission.

In combination with some embodiments of the second aspect, in some embodiments, the uplink transmission configuration includes a CG configuration; one bit in the bitmap is associated with an index of one CG configuration.

In combination with some embodiments of the second aspect, in some embodiments, the index of the CG configuration includes: a first index, wherein one first index is applied to one bandwidth part (BWP); a second index, wherein one second index is applied to a media access control (MAC) entity.

In combination with some embodiments of the second aspect, in some embodiments, bits of the bit map from high to low correspond to indexes of the CG configurations from small to large; or the bits of the bitmap from high to low correspond to the indexes of the CG configurations from large to small.

In combination with some embodiments of the second aspect, in some embodiments, the uplink transmission configuration includes at least one of: a TB cross-slot PUCCH transmission configuration; or a TB cross-slot PUSCH transmission configuration.

In combination with some embodiments of the second aspect, in some embodiments, one bit in the bit map is associated with respective uplink transmission configurations of one BWP; or one bit in the bit map is associated with respective uplink transmission configurations of one serving cell; or one bit in the bit map is associated with respective uplink transmission configurations of one cell group; or one bit in the bit map is associated with one uplink transmission configuration.

In combination with some embodiments of the second aspect, in some embodiments, in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration; in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

In combination with some embodiments of the second aspect, in some embodiments, the first indication includes: a BWP identifier, configured to indicate that the first uplink transmission associated with the BWP identifier can be sent using the UL subband of the SBFD time unit; a cell identifier, configured to indicate that the first uplink transmission associated with the cell identifier can be sent using the UL subband of the SBFD time unit.

In combination with some embodiments of the second aspect, in some embodiments, the second indication corresponds to a first list; the first list includes one or more frequency offsets.

In combination with some embodiments of the second aspect, in some embodiments, one frequency offset is associated with an index of one CG configuration; or one frequency offset is associated with respective CG configurations of one BWP; or one frequency offset is associated with respective CG configurations of one serving cell; or one frequency offset is associated with respective CG configurations of one cell group.

In combination with some embodiments of the second aspect, in some embodiments, in a case where the first list is associated with CG configurations of one BWP, the frequency offset associated with the m-th CG configuration in the first list is related to an index of the m-th CG configuration; or, in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or, in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

In combination with some embodiments of the second aspect, in some embodiments, one frequency offset is associated with one TB cross-slot PUCCH transmission configuration; or one frequency offset is associated with one TB cross-slot PUSCH transmission configuration.

In combination with some embodiments of the second aspect, in some embodiments, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

In combination with some embodiments of the second aspect, in some embodiments, the first information is carried in a Radio Resource Control (RRC) signaling; the RRC signaling is used to configure the first uplink transmission; or
the first information is carried in a media access control-control element (MAC CE); or
the first information is carried in downlink control information (DCI).

In combination with some embodiments of the second aspect, in some embodiments, the first information is carried in any information element (IE) of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

In a third aspect, embodiments of the present disclosure provide a terminal, including: a sending module, configured to send a first uplink transmission on an uplink (UL) subband of a subband full duplex (SBFD) time unit.

In a fourth aspect, embodiments of the present disclosure provide a network device, including: a receiving module, configured to receive a first uplink transmission on an uplink (UL) subband of a subband full duplex (SBFD) time unit.

In a fifth aspect, embodiments of the present disclosure provide a communication device. The communication device includes one or more processors. The processor is configured to invoke instructions to cause the communication device to implement the uplink transmission processing method described in optional implementations of the first aspect and/or the second aspect.

In a sixth aspect, embodiments of the present disclosure provide a storage medium storing instructions that, when executed on a communication device, cause the communication device to implement the uplink transmission processing method described in optional implementations of the first aspect and/or the second aspect.

In a seventh aspect, embodiments of the present disclosure provide a program product that, when executed by a communication device, causes the communication device to implement the uplink transmission processing method described in optional implementations of the first aspect and/or the second aspect.

In an eighth aspect, embodiments of the present disclosure provide a computer program that, when running on a computer, causes the computer to implement the uplink transmission processing method described in optional implementations of the first aspect and/or the second aspect.

It may be understood that the terminal, the network device, the communication system, the storage medium, the program product, and the computer program are all used to implement the method in embodiments of the present disclosure. Therefore, for beneficial effects that may be achieved reference may be made to the beneficial effects in a corresponding method, which will not be repeated here.

Embodiments of the present disclosure provide an uplink transmission processing method, a communication device, and a storage medium. In some embodiments, terms such as uplink transmission processing method and communication method may be used interchangeably, terms such as information indication apparatus, terminal and network device may be used interchangeably, and terms such as communication system and information processing system may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements represented in singular form, such as "one", "a", "this", "the above", "said", "the aforementioned", etc., may represent "one and only one", "one or more", or "at least one", etc. For example, in English, when using articles such as "a", "an", "the", the noun after the article can be understood as a singular or plural expression.

In embodiments of the present disclosure, "a plurality of (multiple)" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "comprising A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those recorded in embodiments. In some cases, they may be understood as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, etc.

In some embodiments, the terms such as "access network device (AN device)", "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, access network devices, core network devices, or network devices may be replaced with terminals. For example, the various embodiments disclosed herein can also be applied to the structure of replacing communication between access network devices, core network devices, or network devices and terminals with communication between multiple terminals (such as device to device (D2D), vehicle to everything (V2X), etc.). In this case, it can also be assumed that the terminal has all or part of the functions of the access network device. In addition, terms such as "uplink" and "downlink" can also be replaced with terms corresponding to communication between terminals (such as "side"). For example, the uplink and downlink channels can be replaced with sidelink channels, and the uplink and downlink can be replaced with sidelink.

In some embodiments, the terminal may be replaced with an access network device, a core network device, or a network device. In this case, it can also be assumed that the access network device, core network device, or network device has all or part of the functions possessed by the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

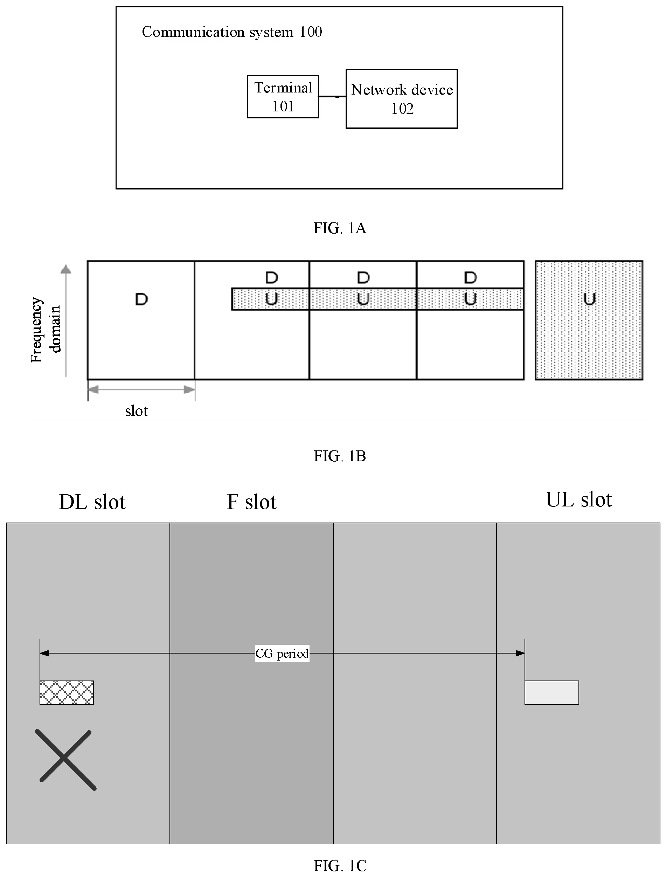

FIG. 1A is a schematic diagram of an architecture of a communication system according to embodiments of the present disclosure.

As shown in FIG. 1A, the communication system 100 includes a terminal 101 and a network device 102. The network device 102 may include an access network device and/or a core network device. In some embodiments, the terminal may communicate with the core network device through the access network device. In other embodiments, the terminal communicates with core network device using Non Access Stratum (NAS) messages. The NAS message can be transmitted transparently through the access network device to the core network device, or transmitted transparently from the core network device to the terminal through the access network device.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the terminal may also be referred to as user equipment (UE).

In some embodiments, the access network device may be, for example, a node or device that accesses the terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a single device, including one or more network elements, or multiple devices or device groups, each including all or part of one or more network elements. Network elements may be virtual or physical. The core network, for example, includes at least one of Evolved Packet Core (EPC), 5G Core Network (5GCN), or Next Generation Core (NGC).

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1A, or to some entities, which are not limited herein. Entities in FIG. 1A are illustrative. The communication system may include all or some of the entities in FIG. 1A, or may include other entities not shown in FIG. 1A. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

To enhance UL coverage, reduce uplink latency, and improve system capacity and configuration flexibility, the SBFD technology was introduced. The SBFD technology enables the network device to send and receive simultaneously, as well as allows the terminal to send or receive at a single time point. Consequently, during resource configuration, an SBFD time unit is introduced in the time domain. Multiple terminals perform uplink sending and downlink receiving on non-overlapping subbands of a single carrier in Time Division Duplex (TDD). FIG. 1B illustrates a schematic diagram of resource configuration. In FIG. 1B, there are five slots, which include four DL slots and one UL slot. DL slots are denoted by "D," while UL slots are denoted by "U." An UL subband is configured on the DL slot, enabling downlink transmission on the DL subband of the DL slot and uplink transmission on the UL subband of the DL slot. Since the DL slot contains the UL subband, three SBFD slots are present among the five DL slots shown in FIG. 1B.

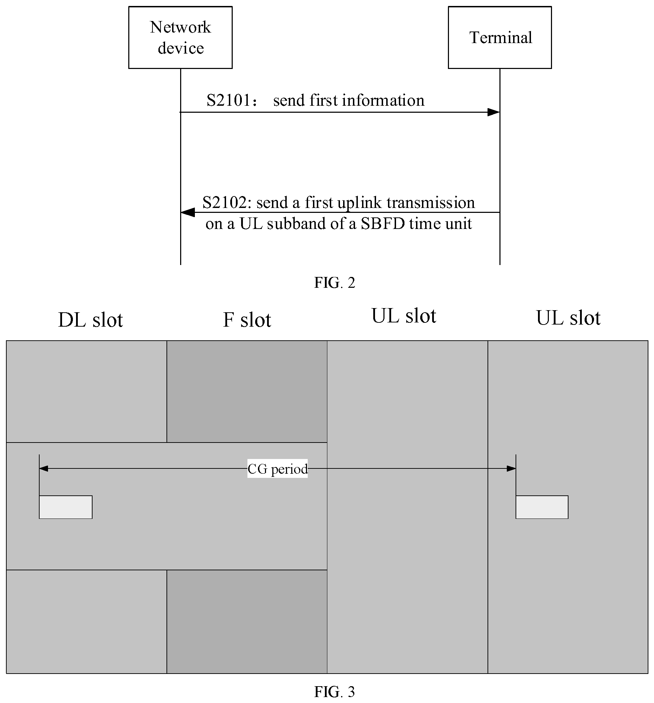

The CG resource corresponding to the CG configuration may be a periodic resource. In a Time Division Duplex (TDD) system, if the time domain position of a certain CG resource corresponds to a downlink (DL) slot, that CG resource will be ignored. For example, if a CG resource spans multiple slots, it may be ignored because all the corresponding slots are configured as uplink (UL) slots. As shown in FIG. 1C, the period corresponding to the CG resource can be referred to as the CG period. CG occasions configured on DL slots will be ignored as illustrated in FIG. 1C, resulting in delayed uplink transmission for those CG occasions configured on DL slots, which leads to significant latency. In view of this, as shown in FIG. 2, the present disclosure provides an uplink transmission processing method performed by a communication system. The method includes the following content.

At S2101, a network device sends first information.

In some embodiments, the network device may be an access network device.

In some embodiments, the network device sends the first information to a terminal.

In some embodiments, the network device multicasts, broadcasts, or unicasts the first information.

In some embodiments, the first information is at least configured to determine whether to send the first uplink transmission on the UL subband of the SBFD time unit.

In some embodiments, the network device sending the first information may be an optional step. For example, if the protocol stipulates that the first uplink transmission can be conducted using the UL subband of the SBFD time unit, the network device may omit sending the first information.

In some embodiments, the SBFD time unit may include: an SBFD time slot, an SBFD microslot, an SBFD symbol, etc.

For example, the SBFD time unit includes at least one of:
a downlink (DL) time unit configured with the UL subband; or
a flexible (F) time unit configured with the UL subband.

In some embodiments, the first information includes at least one of:
a first indication, configured to indicate whether the UL subband of the SBFD time unit can be used to send the first uplink transmission; or
a second indication, configured to indicate a frequency domain offset. This frequency domain offset may be configured for the terminal to shift the transmission occasion in the frequency domain when the terminal uses the UL subband of the SBFD time unit to send the first uplink transmission.

In some embodiments, the first indication may be optional. For example, if the first information includes the second indication, it can be considered that the network device implicitly indicates consent for the terminal to use the UL subband of the SBFD time unit to send the first uplink transmission, and permits the frequency domain position of the transmission occasion to be migrated into the UL subband of the SBFD time unit when the transmission occasion is located outside the UL subband.

In some embodiments, when the first indication is configured to indicate that the UL subband of the SBFD time unit is not allowed for sending the first uplink transmission, the second indication carried by the first information can be ignored, meaning that the second indication is considered invalid at this time. In this case, it can also be understood that the second indication is optional.

In some embodiments, the first uplink transmission includes at least one of:
an uplink transmission corresponding to a configured grant (CG) configuration; or
a transmission block (TB) uplink transmission over multiple slots (TB processing over multiple slots, TBoMS).

In some embodiments, the CG configuration may have Type 1 and Type 2. For Type 1 CG configuration, the network device configures it via the RRC signaling without requiring a dedicated activation signaling, allowing the terminal to directly perform uplink transmission on the CG resource corresponding to the CG configuration. For Type 2 CG configuration, the network device configures it via the RRC signaling and activates the CG resource through DCI. The terminal performs uplink transmission on the activated CG resource. Furthermore, for Type 2 CG configuration, the terminal may also send MAC CE to the network device based on the reception status of DCI and the content of the received DCI. This MAC CE is configured for the terminal to confirm the activated CG resource to the network device. The reception status of the DCI may include: having received DCI and/or having not received DCI.

One CG resource may include one or more CG occasions. If one CG resource includes a plurality of CG occasions, these plurality of CG occasions are typically distributed periodically in the time domain.

In some embodiments, one CG configuration corresponds to one CG occasion or a plurality of periodically distributed CG occasions; one CG occasion is configured on one slot.

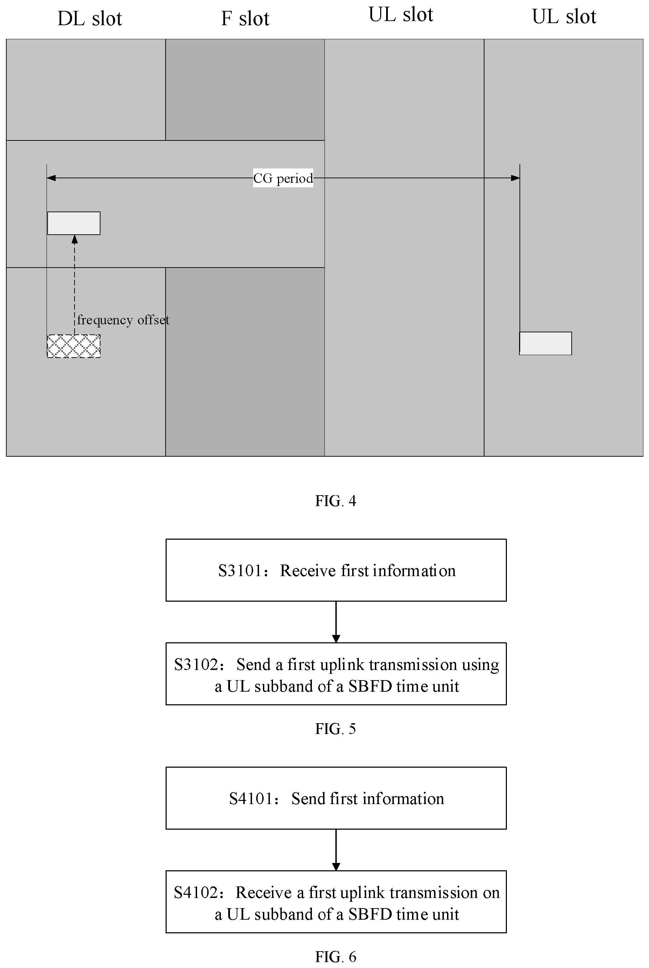

One CG configuration may be associated with a plurality of CG occasions, which are periodically distributed in the time domain. In this case, different CG occasions may be configured on different slots. As shown in FIG. 3 and FIG. 4, one CG occasion is located in one slot, while multiple CG occasions are located in different slots.

In some embodiments, one CG configuration corresponds to one CG occasion or a plurality of periodically distributed CG occasions; one CG occasion is configured on a plurality of continuously distributed slots.

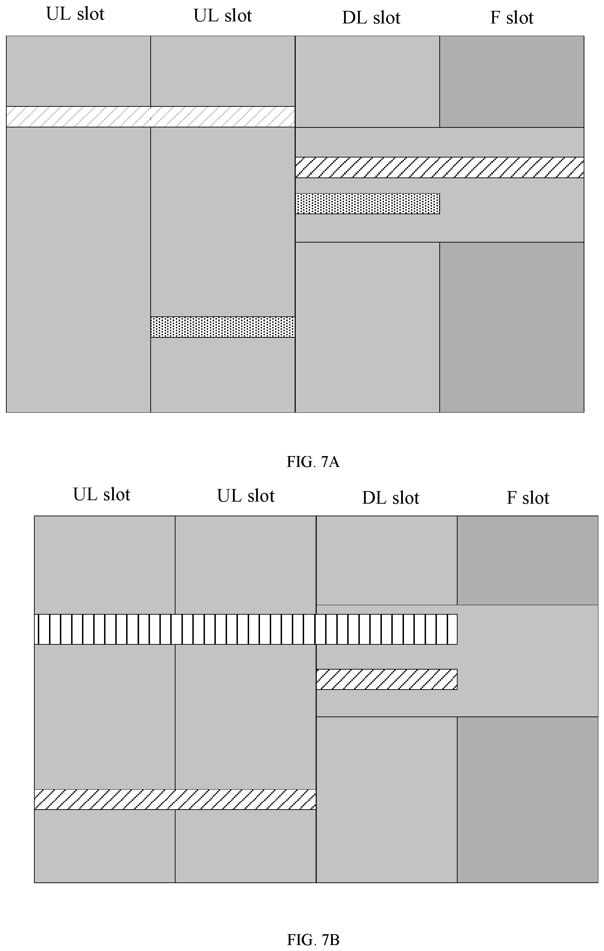

One CG configuration is associated with one or more CG occasions, and each CG occasion may span across slots. For example, one CG occasion may be distributed across a plurality of consecutive slots. The transmission corresponding to this CG configuration can be understood as CG repeated transmission. FIG. 7A and FIG. 7B illustrate one CG occasion distributed across a plurality of consecutive slots.

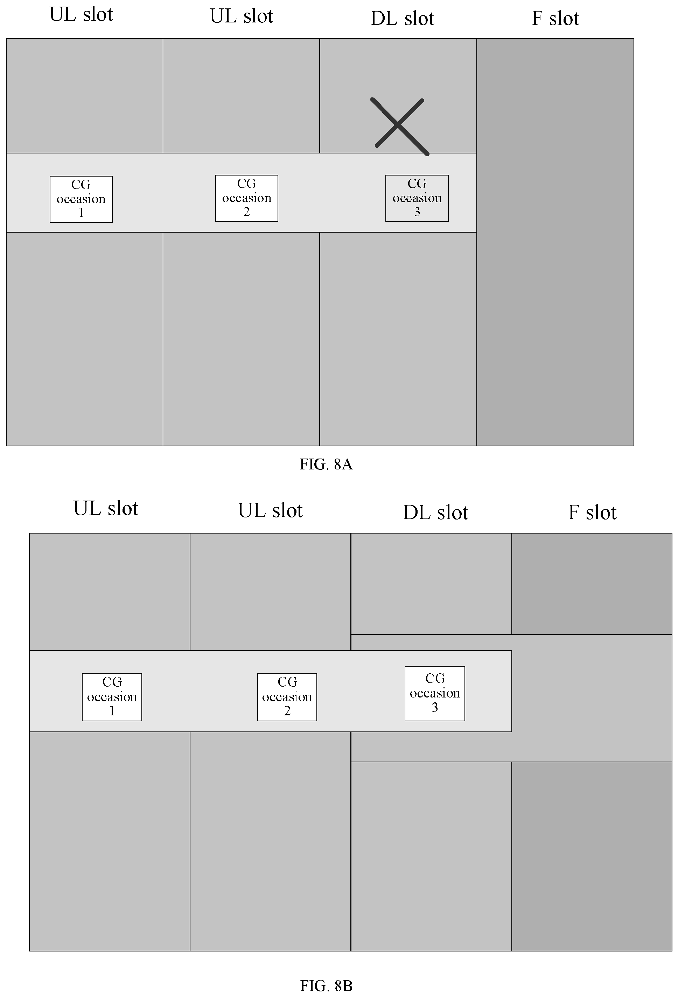

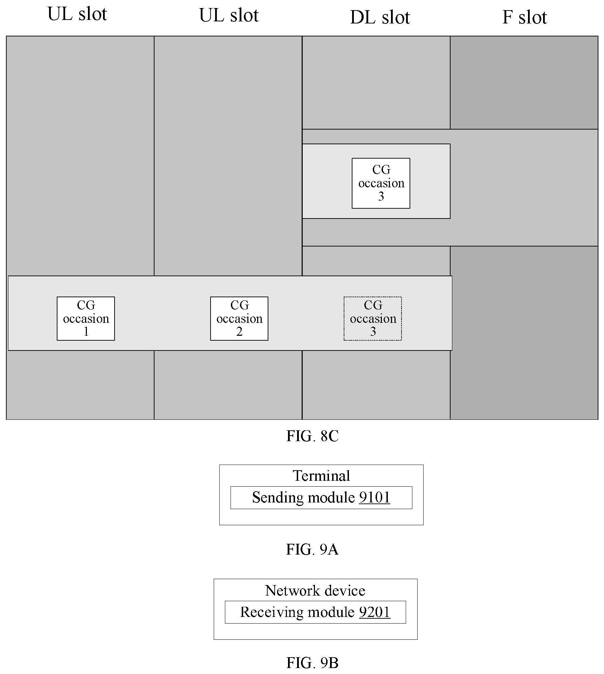

In some embodiments, one CG configuration corresponds to one CG occasion or a plurality of CG occasions periodically distributed, different CG occasions are configured on different slots, and the plurality of CG occasions are configured on a plurality of continuously distributed slots. As shown in FIGs. 8A to 8C, one CG configuration includes one or more CG occasions, which are distributed over a plurality of consecutive slots.

In some embodiments, the uplink transmission corresponding to the CG configuration includes an uplink grant (ULgrant) transmission for XR.

In some embodiments, the first indication may correspond to one indication bit that indicates to the terminal whether the first uplink transmission of the corresponding level can use the UL subband of the SBFD time unit.

In some embodiments, the first indication corresponds to a bit map.

In some embodiments, one bit in the bit map is associated with at least one uplink transmission configuration.

In some embodiments, the uplink transmission configuration includes the CG configuration; one bit in the bitmap is associated with an index of one CG configuration.

In some embodiments, the index of the CG configuration includes:
a first index, wherein one first index is applied to one bandwidth part (BWP);
a second index, wherein one second index is applied to one media access control (MAC) entity.

For example, in terms of CG configuration, the first index may include, but is not limited to, configuredGrantConfigIndex, and the second index may include, but is not limited to, configuredGrant ConfigIndexMAC.

One CG configuration may have both the first index and the second index. The first index is the index of the CG configuration for the BWP, and different CG configurations on one BWP have different first indexes.

The second index is the index of the CG configuration for the MAC entity, where different CG configurations of multiple BWPs and/or multiple cells processed by one MAC entity have different second indexes.

In summary, both the first index and the second index are indexes of the CG configuration, but they have different scopes of application.

In some embodiments, the bits of the bitmap from high to low correspond to the indexes of the CG configurations from small to large; or the bits of the bitmap from high to low correspond to the indexes of the CG configurations from large to small.

In summary, using the bit bitmap for indication has the advantages of easy implementation and low bit overhead.

In some embodiments, the uplink transmission configuration includes at least one of: a TB cross-slot PUCCH transmission configuration; or a TB cross-slot PUSCH transmission configuration.

In an embodiment, one bit in the bit map is associated with respective uplink transmission configuration of one BWP. In this case, one bitmap may be associated with a plurality of BWPs, and one BWP corresponds to one bit in the bitmap. In this case, one bit in the bit map will indicate whether all uplink transmission configurations on one BWP can be sent using the UL subband of the SBFD time unit. For example, in this case, one bit in the bit map will indicate whether all TB cross-slot PUCCH transmissions on a certain BWP can be sent using the UL subband of the SBFD time unit, or one bit in the bit map will indicate whether all TB cross-slot PUSCH transmissions on a certain BWP can be sent using the UL subband of the SBFD time unit. In this case, the length of the bitmap may be equal to the number of associated BWPs.

In some embodiments, one bit in the bit map is associated with respective uplink transmission configurations of one serving cell.

In this case, one serving cell may be configured with one or more BWPs, or the system bandwidth of one serving cell may not be divided into BWPs. Without BWP division, the system bandwidth is not divided into multiple BWPs. One bit in the bitmap indicates respective uplink transmission configurations of the corresponding serving cell. For example, a terminal that supports dual connectivity or carrier aggregation may have multiple serving cells. In this case, the length of the bitmap may be equal to the number of associated cells. In this case, one bit in the bit map will indicate whether all TB cross-slot PUCCH transmissions on a certain serving cell can be sent using the UL subband of the SBFD time unit, or one bit in the bit map will indicate whether all TB cross-slot PUSCH transmissions on a certain serving cell can be sent using the UL subband of the SBFD time unit.

In some embodiments, one bit in the bit map is associated with respective uplink transmission configurations of one cell group. Some terminals have multiple cell groups, such as a primary cell group and at least one secondary cell group. In this case, one bit in the bit map will indicate whether all TB cross-slot PUCCH transmissions on a certain cell group can be sent using the UL subband of the SBFD time unit, or one bit in the bit map will indicate whether all TB cross-slot PUSCH transmissions on a certain cell group can be sent using the UL subband of the SBFD time unit. In this case, the length of the bitmap may be equal to the number of associated cell groups.

In some embodiments, one bit in the bit map is associated with one uplink transmission configuration. In this case, the length of the bit map may be equal to the number of associated uplink transmission configurations.

It should be noted that the length of the bit map here can be understood as the number of bits contained in the bit map.

In a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration.

In a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

For example, the bits of the bit map from high to low correspond to the identifiers of the BWPs from large to small and the bits of the bit map from high to low correspond to the indexes of the uplink transmission configurations of the same BWP from large to small; or
in a case where one bit in the bit map is associated with one uplink transmission configuration and the bit map is associated with a plurality of BWPs, the bits of the bit map from high to low correspond to the identifiers of the BWPs from large to small and the bits of the bit map from high to low correspond to the indexes of the uplink transmission configurations of the same BWP from small to large; or
in a case where one bit in the bit map is associated with one uplink transmission configuration and the bit map is associated with a plurality of BWPs, the bits of the bit map from high to low correspond to the identifiers of the BWPs from small to large and the bits of the bit map from high to low correspond to the indexes of the uplink transmission configurations of the same BWP from small to large; or
in a case where one bit in the bit map is associated with one uplink transmission configuration and the bit map is associated with a plurality of BWPs, the bits of the bit map from high to low correspond to the identifiers of the BWPs from small to large and the bits of the bit map from high to low correspond to the indexes of the uplink transmission configurations of the same BWP from large to small; or
in a case where one bit in the bit map is associated with one uplink transmission configuration and the bit map is associated with a plurality of BWPs, the bits of the bit map from low to high correspond to the identifiers of the BWPs from small to large and the bits of the bit map from high to low correspond to the indexes of the uplink transmission configurations of the same BWP from large to small; or
in a case where one bit in the bit map is associated with one uplink transmission configuration and the bit map is associated with a plurality of BWPs, the bits of the bit map from low to high correspond to the identifiers of the BWPs from small to large and the bits of the bit map from high to low correspond to the indexes of the uplink transmission configurations of the same BWP from small to large; or
in a case where one bit in the bit map is associated with one uplink transmission configuration and the bit map is associated with a plurality of BWPs, the bits of the bit map from low to high correspond to the identifiers of the BWPs from large to small and the bits of the bit map from high to low correspond to the indexes of the uplink transmission configurations of the same BWP from large to small; or
in a case where one bit in the bit map is associated with one uplink transmission configuration and the bit map is associated with a plurality of BWPs, the bits of the bit map from low to high correspond to the identifiers of the BWPs from large to small and the bits of the bit map from high to low correspond to the indexes of the uplink transmission configurations of the same BWP from small to large.

The bits of the bit map from high to low correspond to the cell identifiers of the serving cells from large to small and the bits of the bit map from high to low correspond to the indexes of the uplink transmission configurations of the same serving cell from large to small; or
in a case where one bit in the bit map is associated with one uplink transmission configuration and the bit map is associated with a plurality of serving cells, the bits of the bit map from high to low correspond to the cell identifiers of the serving cells from large to small and the bits of the bit map from high to low correspond to the indexes of the uplink transmission configurations of the same serving cell from small to large; or
in a case where one bit in the bit map is associated with one uplink transmission configuration and the bit map is associated with a plurality of serving cells, the bits of the bit map from high to low correspond to the cell identifiers of the serving cells from small to large and the bits of the bit map from high to low correspond to the indexes of the uplink transmission configurations of the same serving cell from small to large; or
in a case where one bit in the bit map is associated with one uplink transmission configuration and the bit map is associated with a plurality of serving cells, the bits of the bit map from high to low correspond to the cell identifiers of the serving cells from small to large and the bits of the bit map from high to low correspond to the indexes of the uplink transmission configurations of the same serving cell from large to small; or
in a case where one bit in the bit map is associated with one uplink transmission configuration and the bit map is associated with a plurality of serving cells, the bits of the bit map from low to high correspond to the cell identifiers of the serving cells from small to large and the bits of the bit map from high to low correspond to the indexes of the uplink transmission configurations of the same serving cell from large to small; or
in a case where one bit in the bit map is associated with one uplink transmission configuration and the bit map is associated with a plurality of serving cells, the bits of the bit map from low to high correspond to the cell identifiers of the serving cells from small to large and the bits of the bit map from high to low correspond to the indexes of the uplink transmission configurations of the same serving cell from small to large; or
in a case where one bit in the bit map is associated with one uplink transmission configuration and the bit map is associated with a plurality of serving cells, the bits of the bit map from low to high correspond to the cell identifiers of the serving cells from large to small and the bits of the bit map from high to low correspond to the indexes of the uplink transmission configurations of the same serving cell from large to small; or
in a case where one bit in the bit map is associated with one uplink transmission configuration and the bit map is associated with a plurality of serving cells, the bits of the bit map from low to high correspond to the cell identifiers of the serving cells from large to small and the bits of the bit map from high to low correspond to the indexes of the uplink transmission configurations of the same serving cell from small to large.

For another example, the bits of the bit map from high to low correspond to the group identifiers of the cell groups from large to small and the bits of the bit map from high to low correspond to the indexes of the uplink transmission configurations of the same cell group from large to small; or
in a case where one bit in the bit map is associated with one uplink transmission configuration and the bit map is associated with a plurality of cell groups, the bits of the bit map from high to low correspond to the group identifiers of the cell groups from large to small and the bits of the bit map from high to low correspond to the indexes of the uplink transmission configurations of the same cell group from small to large; or
in a case where one bit in the bit map is associated with one uplink transmission configuration and the bit map is associated with a plurality of cell groups, the bits of the bit map from high to low correspond to the group identifiers of the cell groups from small to large and the bits of the bit map from high to low correspond to the indexes of the uplink transmission configurations of the same cell group from small to large; or
in a case where one bit in the bit map is associated with one uplink transmission configuration and the bit map is associated with a plurality of cell groups, the bits of the bit map from high to low correspond to the group identifiers of the cell groups from small to large and the bits of the bit map from high to low correspond to the indexes of the uplink transmission configurations of the same cell group from large to small; or
in a case where one bit in the bit map is associated with one uplink transmission configuration and the bit map is associated with a plurality of cell groups, the bits of the bit map from low to high correspond to the group identifiers of the cell groups from small to large and the bits of the bit map from high to low correspond to the indexes of the uplink transmission configurations of the same cell group from large to small; or
in a case where one bit in the bit map is associated with one uplink transmission configuration and the bit map is associated with a plurality of cell groups, the bits of the bit map from low to high correspond to the group identifiers of the cell groups from small to large and the bits of the bit map from high to low correspond to the indexes of the uplink transmission configurations of the same cell group from small to large; or
in a case where one bit in the bit map is associated with one uplink transmission configuration and the bit map is associated with a plurality of cell groups, the bits of the bit map from low to high correspond to the group identifiers of the cell groups from large to small and the bits of the bit map from high to low correspond to the indexes of the uplink transmission configurations of the same cell group from large to small; or
in a case where one bit in the bit map is associated with one uplink transmission configuration and the bit map is associated with a plurality of cell groups, the bits of the bit map from low to high correspond to the group identifiers of the cell groups from large to small and the bits of the bit map from high to low correspond to the indexes of the uplink transmission configurations of the same cell group from small to large.

In some embodiments, the first indication includes: a BWP identifier, configured to indicate that the first uplink transmission associated with the BWP identifier can be sent using the UL subband of the SBFD time unit;
a cell identifier, configured to indicate that the first uplink transmission associated with the cell identifier can be sent using the UL subband of the SBFD time unit.

In some embodiments, if the first indication includes the BWP identifier, it indicates that all the first uplink transmissions configured on the BWP corresponding to the BWP identifier can be sent using the UL subband of the SBFD time unit, thus achieving BWP level configuration.

In some embodiments, if the first indication includes the cell identifier of a certain cell, it indicates that all first uplink transmissions of the terminal within the cell can be sent using the UL subband of the SBFD time unit according to the transmission occasion, thus achieving cell level configuration.

The cell identifier may include but is not limited to: cell identifier at the physical layer, cell identifier at the MAC layer, and/or cell identifier at the RRC layer.

In some embodiments, the BWP identifier in the first indication may be replaced with a BWP index.

In some embodiments, the cell identifier in the first indication may be replaced with a cell index.

In some embodiments, the second indication corresponds to a first list.

In some embodiments, the first list includes one or more frequency offsets.

In some embodiments, one frequency offset is associated with an index of one CG configuration. In this case, different CG configurations are associated with different frequency offsets, and the number of frequency offsets contained in the first list may be equal to the number of CG configurations associated with the first list.

In some embodiments, one frequency offset is associated with respective CG configurations of one BWP. The frequency offsets associated with CG configurations of different BWPs are different, and the number of frequency offsets contained in the first list may be equal to the number of BWPs associated with the first list.

In some embodiments, one frequency offset is associated with respective CG configurations of one serving cell. In this case, the frequency offsets associated with CG configurations in different serving cells are different, and the number of frequency offsets contained in the first list may be equal to the number of serving cells associated with the first list.

In some embodiments, one frequency offset is associated with respective CG configurations of one cell group. In this case, the frequency offsets associated with CG configurations in different cell groups are different, and the number of frequency offsets contained in the first list may be equal to the number of cell groups associated with the first list.

In some embodiments, in a case where the first list is associated with CG configurations of one BWP, the frequency offset associated with the m-th CG configuration in the first list is related to the index of the m-th CG configuration.

This correlation may be reflected in the fact that respective frequency offsets in the first list from first to last correspond to the indexes of the CG configurations from small to large, or in the fact that respective frequency offsets in the first list correspond to the indexes of the CG configurations from large to small.

In some embodiments, in a case where the first list is associated with CG configurations of multiple BWPs, the frequency offset associated with the m-th CG configuration in the first list is related to the index of the m-th CG configuration and the BWP identifier of the BWP where the m-th CG configuration is located.

For example, the frequency offsets in the first list from first to last correspond to the BWP identifiers from large to small, and then correspond to the indexes of the CG configurations of the same BWP from large to small or from small to large. Alternatively, the frequency offsets in the first list from first to last correspond to the BWP identifiers from small to large, and then correspond to the indexes of the CG configurations of the same BWP from large to small or from small to large.

In some embodiments, in the case where the first list is associated with CG configurations of multiple cells, the frequency offset associated with the m-th CG configuration in the first list is related to the index of the m-th CG configuration, the cell identifier of the cell where the m-th CG configuration is located, and the BWP identifier of the BWP where the m-th CG configuration is located.

For example, the frequency offsets in the first list from first to last correspond to the cell identifiers from large to small, then to the BWP identifiers from large to small, and finally to the indexes of the CG configurations of the same BWP from large to small or from small to large. Alternatively, for example, the frequency offset in the first list from first to last correspond to the cell identifiers from small to large, then to the BWP identifiers from large to small, and finally to the indexes of the CG configurations of the same BWP from large to small or from small to large. Alternatively, the frequency offsets in the first list from first to last correspond to the cell identifiers from large to small, then to the BWP identifiers from small to large, and finally to the indexes of the CG configurations of the same BWP from large to small or from small to large.

In some embodiments, m may be a natural number or a positive integer.

In some embodiments, one frequency offset is associated with one TB cross-slot PUCCH transmission configuration; or one frequency offset is associated with one TB cross-slot PUSCH transmission configuration.

In some embodiments, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

In some embodiments, the first information is carried in a RRC signaling.

In some embodiments, the RRC signaling is used to configure the first uplink transmission.

In other embodiments, the RRC signaling may be different from the RRC signaling used for configuring the first uplink transmission.

In some embodiments, the first information is carried in the media access control-control element (MAC CE).

In some embodiments, the first information is carried in downlink control information (DCI).

In some embodiments, the DCI may be the DCI that activates the first uplink transmission. In other embodiments, the DCI may be different from the DCI that activates the first uplink transmission.

In some embodiments, the second indication may include one frequency offset. This frequency offset can be used for various uplink transmission configurations, uplink transmission configurations of one or more BWP, uplink transmission configurations of one or more cells, or uplink transmission configurations of one or more cell groups.

In some embodiments, the first information is carried by the information element (IE) and sent to the terminal.

The IE carrying the first information may be a newly introduced IE.

In some embodiments, the first information may be carried by the IE in the related art, which may include, but is not limited to at least one of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

At S2102, a terminal sends a first uplink transmission on a UL subband of a SBFD time unit.

In some embodiments, the terminal sends the first uplink transmission to the network device on the UL subband of the SBFD time unit.

In some embodiments, the terminal sends the first uplink transmission to the network device on the UL subband of the SBFD slot.

In some embodiments, the terminal sends the first uplink transmission to the network device on the UL subband of the SBFD symbol.

In some embodiments, in a case where the transmission occasion of the first uplink transmission is within the UL subband of the SBFD time unit, the first uplink transmission is sent at the transmission occasion.

In some embodiments, in a case where the transmission occasion of the first uplink transmission is outside the UL subband of the SBFD time unit, the transmission occasion is shifted in the frequency domain to the first position within the UL subband, and the first uplink transmission is sent at the first position of the UL subband.

In some embodiments, there is no need for protocol agreements or indication from the network side. If the transmission occasion of the first uplink transmission falls on the SBFD time unit, the transmission occasion will be automatically shifted to the UL subband for sending the first uplink transmission if it is located on the DL subband or flexible subband of the SBFD time unit.

In some embodiments, if the protocol agreement allows the use of the UL subband of the SBFD time unit to send the first uplink transmission, the UL subband of the SBFD time unit is used to send the first uplink transmission.

In some embodiments, in a case where the first indication is configured to indicate that the UL subband of the SBFD time unit is allowed for sending the first uplink transmission, the first uplink transmission is sent using the UL subband of the SBFD time unit.

In some embodiments, in a case where the first indication is configured to indicate that the UL subband of the SBFD time unit is not allowed for sending the first uplink transmission, the first uplink transmission is not sent using the UL subband of the SBFD time unit.

In some embodiments, the first uplink transmission is sent using the UL subband of the SBFD time unit of the BWP, on the BWP where the first uplink transmission is permitted to be sent using the UL subband of the SBFD time unit.

In some embodiments, the first uplink transmission is sent using the UL subband of the SBFD time unit of the serving cell, in the serving cell where the first uplink transmission is permitted to be sent using the UL subband of the SBFD time unit.

In some embodiments, the first uplink transmission is sent using the UL subband of the SBFD time unit of the cell group, in the cell group where the use of the first uplink transmission is permitted to be sent using the UL subband of the SBFD time unit.

In some embodiments, in a case where the second indication is received from the network device and the transmission occasion of the first uplink transmission falls within the UL subband of the SBFD time unit, the first uplink transmission is sent at the transmission occasion.

In some embodiments, in a case where no first indication is received and the second indication from the network device is received, and the transmission occasion of the first uplink transmission falls within the UL subband of the SBFD time unit, the first uplink transmission is sent at the transmission occasion.

In some embodiments, in a case where the second indication sent by the network device is received and the transmission occasion of the first uplink transmission is outside the UL subband of the SBFD time unit, and the position obtained by shifting the transmission occasion in the frequency domain based on the frequency offset corresponding to the second indication is within the UL subband, the first uplink transmission is sent at the corresponding position of the UL subband.

In some embodiments, in a case where the second indication sent by the network device is received and the transmission occasion of the first uplink transmission is outside the UL subband of the SBFD time unit, and the position obtained by shifting the transmission occasion in the frequency domain based on the frequency offset corresponding to the second indication is outside the UL subband, the first uplink transmission is not sent at the corresponding position of the UL subband.

In some embodiments, in a case where the second indication sent by the network device is received and the transmission occasion of the first uplink transmission is outside the UL subband of the SBFD time unit, and the position obtained by shifting the transmission occasion in the frequency domain based on the frequency offset corresponding to the second indication is outside the UL subband, the corresponding transmission occasion is ignored.

In some embodiments, in a case where the first indication is received and the second indication is not received, and the transmission occasion of the first uplink transmission is within the UL subband of the SBFD time unit, the first uplink transmission is sent at that transmission occasion.

In some embodiments, in a case where the first indication is received and the second indication is not received, and the transmission occasion of the first uplink transmission is outside the UL subband of the SBFD time unit, the first uplink transmission is not sent at that transmission occasion, that is, the transmission occasion is ignored.

In some embodiments, in a case where the first indication is received and the second indication is not received, and the transmission occasion of the first uplink transmission is outside the UL subband of the SBFD time unit, the frequency domain position of the transmission occasion is directly shifted to be within the UL subband of the SBFD time unit to send the first uplink transmission.

In some embodiments, the time domain position of the transmission occasion is maintained unchanged when shifting the frequency domain position of the transmission occasion.

As shown in FIG. 3, there is a CG period between two CG occasion, and if a certain CG occasion is located on the UL subband of the DL slot, the first uplink transmission configured on the CG occasion is sent using the UL subband of the DL slot. From FIG. 3, it can be seen that the bandwidth occupied by DL slots is greater than the bandwidth of the subband of the DL slots. For the first uplink transmission on the CG configuration or CG resource, the CG occasion is an example of the aforementioned transmission occasion.

As shown in FIG. 4, there is a CG period between two CG occasions. If a certain CG occasion is located on the DL subband of the DL slot, the CG occasion is shifted in the frequency domain to the UL subband of the DL slot while keeping its time domain position unchanged, and the first uplink transmission configured on the CG occasion is sent using the UL subband of the DL slot.

In some embodiments, as shown in FIG. 7A, one CG occasion may span multiple slots. In FIG. 7A, there are two types of CG occasions shown using different fillers, one occupying 4 slots and the other occupying 2 slots. When a part of the resource of the CG occasion is configured on the DL slot and/or F slot, the corresponding time domain position of the CG occasion is transferred to the UL subband of the DL slot and/or F slot. In some embodiments, as shown in FIG. 7A, one CG occasion may span multiple slots. In FIG. 7A, different fillers are used to show two types of CG occasions. Both CG occasions occupy three slots at different frequency domain positions. One CG occasion occupies a subband that happens to be located in the UL subband of the DL and F slots, while the other CG occasion occupies the DL subband in the DL slot. In order to achieve uplink transmission, a portion of the time domain position of the CG occasion on the DL slot is frequency shifted to the UL subband of the DL slot. In some embodiments, for XR services, etc., multiple CG occasions can be configured on multiple slots distributed continuously. As shown in FIG. 8A, CG occasion 1, CG occasion 2, and CG occasion 3 are configured on three consecutive slots. If it is not allowed to use the UL subband of the SBFD time unit for transmission, then CG occasion 3 needs to be ignored. If it is allowed to use the UL subband of the SBFD time unit for transmission, the transmission configured on CG occasion 3 can be performed on the UL subband of the DL slot as shown in FIG. 8B. In some embodiments, as shown in FIG. 8A, CG occasion 1, CG occasion 2, and CG occasion 3 are configured on three consecutive slots, but CG occasion 3 is located on the DL subband of the DL slot. The CG occasion 3 is frequency shifted to the UL subband of the DL slot for performing related uplink transmission.

As shown in FIG. 5, embodiments of the present disclosure provide an uplink transmission processing method, performed by a terminal. The method includes the following content.

At S310 information is received.

In some embodiments, the first information is at least configured to determine whether to send the first uplink transmission on the UL subband of the SBFD time unit.

In some embodiments, the first uplink transmission includes at least one of:
an uplink transmission corresponding to a configured grant (CG) configuration; or
a transmission block (TB) uplink transmission over multiple slots.

In some embodiments, the first information includes at least one of:
a first indication, configured to indicate whether the UL subband of the SBFD time unit can be used to send the first uplink transmission; or
a second indication, configured to indicate a frequency domain offset.

In some embodiments, one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

In some embodiments, the uplink transmission corresponding to the CG configuration includes an uplink grant (ULgrant) transmission for extended reality (XR).

In some embodiments, the SBFD time unit includes at least one of:
a downlink (DL) time unit configured with the UL subband; or
a flexible (F) time unit configured with the UL subband.

It should be noted that, for relevant description of the first information here, reference can be made to S2101 in the embodiment corresponding to FIG. 2.

At S3102, the first uplink transmission is sent using the UL subband of the SBFD time unit.

It should be noted that, for optional implementations of S3102, reference can be made to S2102 in the embodiment corresponding to FIG. 2.

It should be noted that S3101 may be optional. For example, the terminal may use the UL subband of the SBFD time unit to send the first uplink transmission according to the protocol agreement, when the transmission occasion of the first uplink transmission is in the DL time unit or F time unit and the DL time unit or F time unit belongs to the SBFD time unit. Alternatively, the terminal may default to using the UL subband of the SBFD time unit to send the first uplink transmission when the transmission occasion of the first uplink transmission is in the DL time unit or F time unit and the DL time unit or F time unit belongs to the SBFD time unit.

As shown in FIG. 6, embodiments of the present disclosure provide an uplink transmission processing method, performed by a network device. The method includes the following content.

At S4101, first information is sent.

In some embodiments, the network device sends the first information to the terminal.

In some embodiments, the first information is at least configured to determine whether to send the first uplink transmission on the UL subband of the SBFD time unit.

In some embodiments, the first information includes at least one of:
a first indication, configured to indicate whether the UL subband of the SBFD time unit can be used to send the first uplink transmission; or
a second indication, configured to indicate a frequency domain offset.

It should be noted that for optional implementations of S4101, reference can be made to S2101 in the embodiment corresponding to FIG. 2.

At S4102, the first uplink transmission is received on the UL subband of the SBFD time unit.

It should be noted that for the first uplink transmission here, reference can be made to relevant description in the embodiment corresponding to FIG. 2.

The first uplink transmission includes at least one of:
an uplink transmission corresponding to a configured grant (CG) configuration; or
a transmission block (TB) uplink transmission over multiple slots.

In some embodiments, one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

In some embodiments, the uplink transmission corresponding to the CG configuration includes an uplink grant (ULgrant) transmission for extended reality (XR).

In some embodiments, the SBFD time unit includes at least one of:
a downlink (DL) time unit configured with the UL subband; or
a flexible (F) time unit configured with the UL subband.

In some embodiments, receiving the first uplink transmission on the UL subband of the SBFD time unit includes at least one of:
in a case where a transmission occasion of the first uplink transmission is located within the UL subband of the SBFD time unit, receiving the first uplink transmission at the transmission occasion; or
in a case where a transmission occasion of the first uplink transmission is located outside the UL subband of the SBFD time unit, shifting the transmission occasion in a frequency domain to a first position within the UL subband, and receiving the first uplink transmission at the first position within the UL subband.

In some embodiments, before receiving the first uplink transmission, the method further includes: sending first information to a terminal; wherein the first information is at least configured to determine whether to send the first uplink transmission on the UL subband of the SBFD time unit.

Embodiments of the present disclosure support the use of SBFD configuration to configure CG resources and support CG repetition, minimizing CG transmission data latency and better supporting low latency services.

For both Type 1 and Type 2 CG configurations, if a DL slot or a flexible slot is at a certain CG resource position, and if the DL slot or flexible slot exists for the UL subband, then the DL slot or F slot is the SBFD time unit, and the terminal can consider the current CG resource position valid.

Furthermore, if the slot where the current CG resource position is located is the SBFD time unit, but the frequency domain position of the CG resource position is not within the UL subband range of the SBFD, the network side will configure a frequency offset to ensure that the CG resource position falls within the SBFD in the frequency domain and becomes a valid CG resource.

Furthermore, the new position of the CG resource after shifting in the frequency domain is determined based on pre-defined algorithms in the protocol or is calculated by the terminal itself.

### Embodiment 1:

A first indication is configured through an RRC dedicated signaling. The first indication is configured to indicate whether the corresponding CG configuration can use the UL resource in the SBFD slot as the CG occasion.

A second indication is configured through an RRC signaling. The second indication is configured to indicate the frequency domain offset of the CG occasion of the CG configuration in the SBFD slot relative to the CG frequency domain position.

The first and second indications are configured in the ConfiguredGrantConfig IE.

### Embodiment 2:

A bit map is configured through the RRC dedicated signaling. Each bit in the bit map corresponds one-to-one with the ConfiguredGrantConfigIndexMAC associated with a CG configuration. For example, the bit map corresponds one-to-one from the lower bits to the higher bits to ConfiguredGrantConfigIndexMAC from small to large. The value (e.g. 1) of each bit in the bit map is used to indicate whether the corresponding CG configuration can use the UL resources in the SBFD slot as the location for CG occasion. The bit map may be configured in CellGroupConfig IE or mac-CellGroupConfig IE.

For example, mac-CellGroupConfig IE may be a sub-IE of the CellGroupConfig IE.

### Embodiment 3:

A bit map is configured through the RRC dedicated signaling. Each bit in the bit map corresponds one-to-one with the ConfiguredGrantConfigIndex associated with a CG configuration. For example, the bit map corresponds one-to-one from the lower bits to the higher bits to ConfiguredGrantConfigIndex from small to large. The value (e.g. 1) of each bit in the bit map is used to indicate whether the corresponding CG configuration can use the UL resources in the SBFD slot as the location for CG occasion. The bit map may be configured in BWP-UplinkDedicated.

### Embodiment 4:

MAC CE or DCI is used to dynamically indicate whether the corresponding CG configuration can use the UL resource in the SBFD slot as the location for CG occasion. MAC CE contains a bit bitmap, BWP Identity (ID), and/or ServCellIndex. This ServCellIndex is a type of cell index.

Each bit in the bit map corresponds one-to-one with an index associated with a CG configuration (ConfiguredGrantConfigIndex/ConfiguredGrantConfigIndexMAC). For example, the bit map corresponds one-to-one from the lower bits to the higher bits to ConfiguredGrantConfigIndex or ConfiguredGrantConfigIndexMAC from small to large. The value (e.g. 1) of each bit in the bit map is used to indicate whether the corresponding CG configuration can use the UL resources in the SBFD slot as the location for CG occasion.

### Embodiment 5:

A frequency offset list is configured through the RRC dedicated signaling. The frequency offset list is configured in the BWP-UplinkDedicated IE. Each frequency offset in the frequency offset list corresponds one-to-one from first to last with the ConfiguredGrantConfigIndex of the CG configured in the associated BWP from small to large, indicating the frequency offset of the CG occasion of the CG configuration in the SBFD slot relative to the CG frequency domain position.

### Embodiment 6:

A frequency offset list is configured through the RRC dedicated signaling. The frequency offset list is configured in the CellGroupCopnfig IE or mac-CellGroupConfig IE. Each frequency offset in the frequency offset list corresponds one-to-one from first to last with the ConfiguredGrantConfigIndexMAC of the configured CG from small to large, indicating the frequency offset of the CG occasion of the CG configuration in the SBFD slot relative to the CG frequency domain position.

If a CG occasion repeatedly occupies n slots or m symbols, then the DL slots of SBFD are also available slots that can be used.

If the frequency domain position required for the CG repetition does not fall within the UL subband of SBFD, the network side can configure a frequency offset, so that the available slots for the CG repetition can be within the UL subband of SBFD.

Here, for the first indication, second indication, frequency offset list, and bit map, reference can be made to the aforementioned embodiments 1 to 6, which will not be repeated here.

If the Transmission Block (TB) processing over multiple slots (TBoMS) occupies n slots, then the DL slots with SBFD are also available slots. If the frequency domain position that TBoMS needs to use does not fall within the UL subband corresponding to SBFD technology, the network side can configure a frequency offset so that the available slots of TBoMS may be the slots where the UL subband of SBFD is located.

### Embodiment 7:

Specifically, a first indication is configured through the RRC dedicated signaling. The first indication is configured to indicate whether PUSCH or PUCCH can use the UL subband in the SBFD slot as a valid UL slot for PUCCH DMRS bundling or PUSCH DMRS bundling.

A second indication is configured through the RRC signaling. The second indication is configured to indicate the frequency offset of the valid UL slot for PUSCH or PUCCH to use the UL resource in the SBFD slot as the valid UL slot of the PUCCH DMRS bundling or PUSCH DMRS bundling.

The frequency offset refers to the frequency offset relative to the PUSCH or PUCCH position of the previous UL slot.

The first and second indications are configured in PUSCH-Config IE, DMRS-BundlingPUSCH-Config IE, or DMRS-BundlingPUCCH-Config.

### Embodiment 8:

A bit map is configured in the RRC dedicated signaling. Each bit in the bit map is associated with a UL BWP. For example, the bit map corresponds one-to-one from the lowest bit to the highest bit with UL BWP ID from small to large. The value of each bit in the bit map (e.g. 1) is used to indicate whether PUSCH or PUCCH can use the UL resource in the SBFD slot.

The bit map can be configured in the ServingCellConfig IE.

### Embodiment 9:

A bit map is configured in the RRC dedicated signaling. Each bit in the bit map is associated with a UL BWP. For example, the bit map corresponds one-to-one from the lowest bit to the highest bit with first ServCellIndex and then UL BWP ID from small to large. The value of each bit in the bit map (e.g. 1) is used to indicate whether PUSCH or PUCCH can use the UL resource in the SBFD slot.

The bit map can be configured in the CellGroupConfig IE.

### Embodiment 10:

A frequency offset list is configured in the RRC dedicated signaling. Each frequency offset in the frequency offset list is associated with a UL BWP.

Each frequency offset in the list from first to last corresponds one-to-one with UL BWP ID from small to large, indicating the frequency offset for PUSCH or PUCCH to use the UL resource in the SBFD slot as the valid UL slot for PUCCH DMRS bundling or PUCCH DMRS bundling. For example, the bit map corresponds one-to-one from the lowest bit to the highest bit with UL BWP ID from small to large. The value of each bit in the bit map (e.g. 1) is used to indicate the frequency offset for PUSCH or PUCCH to use the UL resource in the SBFD slot as the valid UL slot for PUCCH DMRS bundling or PUCCH DMRS bundling. The frequency offset is the frequency interval relative to the PUSCH or PUCCH position of the previous UL slot.

The frequency offset list can be configured in the ServingCellConfig IE.

### Embodiment 11:

A frequency offset list is configured in the RRC dedicated signaling. Each frequency offset in the frequency offset list is associated with a UL BWP.

Each frequency offset in the list from first to last corresponds one-to-one with UL BWP ID from small to large, indicating the frequency offset for PUSCH or PUCCH to use the UL resource in the SBFD slot as the valid UL slot for PUCCH DMRS bundling or PUCCH DMRS bundling. For example, the bit map corresponds one-to-one from the lowest bit to the highest bit with first ServCellIndex and then UL BWP ID from small to large. The value of each bit in the bit map (e.g. 1) is used to indicate the frequency offset for PUSCH or PUCCH to use the UL resource in the SBFD slot as the valid UL slot for PUCCH DMRS bundling or PUCCH DMRS bundling. The frequency offset is the frequency offset relative to the PUSCH or PUCCH position of the previous UL slot.

In some embodiments, the frequency offset list may be configured in the CellGroupConfig IE.

During XR service transmission, the packet size of XR service varies. In order to meet the demand for service data transmission latency, a type of CG resource is configured. This type of CG resource can be illustrated in FIGs. 8A to 8C, where one CG configuration corresponds to multiple CG occasions and these occasions are continuously distributed across multiple adjacent slots. The terminal can send XR service data based on the XR service data packet to be sent by itself occupying part or all of the CG occasion. One CG occasion may correspond to one UL grant.

If the CG occasion is located in a DL slot, to reduce transmission delay, the UL subband of the SBFD slot can be used as UL grant to send XR service data.

If a certain UL grant in the CG appears in an SBFD slot but does not fall within the UL subband of SBFD, the network side can configure a frequency offset to enable the UL grant to use the UL resource of SBFD.

Similarly, in the NR-U scenario, CG resources are allocated for multiple consecutive slots, and the above scheme can also be adopted, which uses SBFD resources as valid UL slots. According to whether the subband configured for transmission occasion is located within the UL subband of the SBFD slot, frequency shift or no frequency shift can be performed.

For relevant descriptions regarding the first indication, second indication, bit map, and/or frequency offset, reference can be made any of the aforementioned embodiments, for example, any of the aforementioned embodiments 1 to 11.

In embodiments of the present disclosure, some or all of the steps and their optional implementations may be combined with any of the steps in other embodiments, or with any of the optional implementations in other embodiments.

In embodiments of the present disclosure, some or all of the steps and their optional implementations may be combined with any of the steps in other embodiments, or with any of the optional implementations in other embodiments.

Embodiments of the present disclosure further provide an apparatus for implementing any one of the above methods. For example, an apparatus is provided, including units or modules for implementing steps executed by the terminal in any one of the above methods. For another example, another apparatus is further provided, including units or modules for implementing steps executed by the network device (e.g., an access network device, or a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

As shown in FIG. 9A, embodiments of the present disclosure provide a terminal, including:
a sending module 9101, configured to send a first uplink transmission on an uplink (UL) subband of a subband full duplex (SBFD) time unit. In some embodiments, the terminal further includes a receiving module and/or a processing module.

In some embodiments, the receiving module and the sending module may correspond to specific structures such as the antenna or network interface of the terminal.

Optionally, the processing module may be configured to perform steps related to information processing in the uplink transmission processing method executed by the terminal.

In some embodiments, the first uplink transmission includes at least one of:
an uplink transmission corresponding to a configured grant (CG) configuration; or
a transmission block (TB) uplink transmission over multiple slots.

In some embodiments, one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

In some embodiments, the uplink transmission corresponding to the CG configuration includes an uplink grant (ULgrant) transmission for extended reality (XR).

In some embodiments, the SBFD time unit includes at least one of:
a downlink (DL) time unit configured with the UL subband; or
a flexible (F) time unit configured with the UL subband.

In some embodiments, sending the first uplink transmission on the UL subband of the SBFD time unit includes at least one of:
in a case where a transmission occasion of the first uplink transmission is located within the UL subband of the SBFD time unit, sending the first uplink transmission at the transmission occasion; or
in a case where a transmission occasion of the first uplink transmission is located outside the UL subband of the SBFD time unit, shifting the transmission occasion in a frequency domain to a first position within the UL subband, and sending the first uplink transmission at the first position within the UL subband.

In some embodiments, before sending the first uplink transmission, the method further includes: receiving first information sent by a network device; wherein the first information is at least configured to determine whether to send the first uplink transmission on the UL subband of the SBFD time unit.

In some embodiments, the first information includes at least one of:
a first indication, configured to indicate whether the UL subband of the SBFD time unit can be used to send the first uplink transmission; or
a second indication, configured to indicate a frequency domain offset; wherein the frequency domain offset is configured for the terminal to shift the transmission occasion in the frequency domain when the terminal uses the UL subband of the SBFD time unit to send the first uplink transmission.

In some embodiments, the first indication corresponds to a bit map; one bit in the bit map is associated with at least one uplink transmission configuration of the first uplink transmission.

In some embodiments, the uplink transmission configuration includes a CG configuration;
one bit in the bitmap is associated with an index of one CG configuration.

In some embodiments, the index of the CG configuration includes:
a first index, wherein one first index is applied to one bandwidth part (BWP);
a second index, wherein one second index is applied to a media access control (MAC) entity.

In some embodiments, bits of the bit map from high to low correspond to indexes of the CG configurations from small to large; or the bits of the bitmap from high to low correspond to the indexes of the CG configurations from large to small.

In some embodiments, the uplink transmission configuration includes at least one of:
a TB cross-slot PUCCH transmission configuration; or
a TB cross-slot PUSCH transmission configuration.

In some embodiments, one bit in the bit map is associated with respective uplink transmission configurations of one BWP; or
one bit in the bit map is associated with respective uplink transmission configurations of one serving cell; or
one bit in the bit map is associated with respective uplink transmission configurations of one cell group; or
one bit in the bit map is associated with one uplink transmission configuration.

In some embodiments, the method further includes:
in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration;
in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

In some embodiments, the first indication includes:
a BWP identifier, configured to indicate that the first uplink transmission associated with the BWP identifier can be sent using the UL subband of the SBFD time unit;
a cell identifier, configured to indicate that the first uplink transmission associated with the cell identifier can be sent using the UL subband of the SBFD time unit.

In some embodiments,
the second indication corresponds to a first list; the first list includes one or more frequency offsets.

In some embodiments,
one frequency offset is associated with an index of one CG configuration; or
one frequency offset is associated with respective CG configurations of one BWP; or
one frequency offset is associated with respective CG configurations of one serving cell; or
one frequency offset is associated with respective CG configurations of one cell group.

In some embodiments,
in a case where the first list is associated with CG configurations of one BWP, the frequency offset associated with the m-th CG configuration in the first list is related to an index of the m-th CG configuration; or
in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or
in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

In some embodiments, one frequency offset is associated with one TB cross-slot PUCCH transmission configuration; or one frequency offset is associated with one TB cross-slot PUSCH transmission configuration.

In some embodiments, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

In some embodiments,
the first information is carried in a Radio Resource Control (RRC) signaling; the RRC signaling is used to configure the first uplink transmission; or
the first information is carried in a media access control-control element (MAC CE); or
the first information is carried in downlink control information (DCI).

In some embodiments, the first information is carried in any information element (IE) of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

As shown in FIG. 9B, embodiments of the present disclosure provide a network device, including:
a receiving module, configured to receive a first uplink transmission on an uplink (UL) subband of a subband full duplex (SBFD) time unit.

In some embodiments, the network device further includes a sending module and/or a processing module.

In some embodiments, the receiving module and the sending module may correspond to specific structures such as the antenna or network interface of the network device.

Optionally, the processing module may be configured to perform steps related to information processing in the uplink transmission processing method executed by the network device.

In some embodiments, the first uplink transmission includes at least one of:
an uplink transmission corresponding to a configured grant (CG) configuration; or
a transmission block (TB) uplink transmission over multiple slots.

In some embodiments, one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

In some embodiments, the uplink transmission corresponding to the CG configuration includes an uplink grant (ULgrant) transmission for extended reality (XR).

In some embodiments, the SBFD time unit includes at least one of:
a downlink (DL) time unit configured with the UL subband; or
a flexible (F) time unit configured with the UL subband.

In some embodiments, receiving the first uplink transmission on the UL subband of the SBFD time unit includes at least one of:
in a case where a transmission occasion of the first uplink transmission is located within the UL subband of the SBFD time unit, receiving the first uplink transmission at the transmission occasion; or
in a case where a transmission occasion of the first uplink transmission is located outside the UL subband of the SBFD time unit, shifting the transmission occasion in a frequency domain to a first position within the UL subband, and receiving the first uplink transmission at the first position within the UL subband.

In some embodiments, before receiving the first uplink transmission, the method further includes: sending first information to a terminal; wherein the first information is at least configured to determine whether to send the first uplink transmission on the UL subband of the SBFD time unit.

In some embodiments, the first information includes at least one of:
a first indication, configured to indicate whether the UL subband of the SBFD time unit can be used to send the first uplink transmission; or
a second indication, configured to indicate a frequency domain offset; wherein the frequency domain offset is configured for the terminal to shift the transmission occasion in the frequency domain when the terminal uses the UL subband of the SBFD time unit to send the first uplink transmission.

In some embodiments, the first indication corresponds to a bit map; one bit in the bit map is associated with at least one uplink transmission configuration of the first uplink transmission.

In some embodiments, the uplink transmission configuration includes a CG configuration;
one bit in the bitmap is associated with an index of one CG configuration.

In some embodiments, the index of the CG configuration comprises:
a first index, wherein one first index is applied to one bandwidth part (BWP);
a second index, wherein one second index is applied to a media access control (MAC) entity.

In some embodiments, bits of the bit map from high to low correspond to indexes of the CG configurations from small to large; or the bits of the bitmap from high to low correspond to the indexes of the CG configurations from large to small.

In some embodiments, the uplink transmission configuration includes at least one of:
a TB cross-slot PUCCH transmission configuration; or
a TB cross-slot PUSCH transmission configuration.

In some embodiments, one bit in the bit map is associated with respective uplink transmission configurations of one BWP; or
one bit in the bit map is associated with respective uplink transmission configurations of one serving cell; or
one bit in the bit map is associated with respective uplink transmission configurations of one cell group; or
one bit in the bit map is associated with one uplink transmission configuration.

In some embodiments, in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration;
in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

In some embodiments, the first indication includes:
a BWP identifier, configured to indicate that the first uplink transmission associated with the BWP identifier can be sent using the UL subband of the SBFD time unit;
a cell identifier, configured to indicate that the first uplink transmission associated with the cell identifier can be sent using the UL subband of the SBFD time unit.

In some embodiments, the second indication corresponds to a first list; the first list includes one or more frequency offsets.

In some embodiments, one frequency offset is associated with an index of one CG configuration; or
one frequency offset is associated with respective CG configurations of one BWP; or
one frequency offset is associated with respective CG configurations of one serving cell; or
one frequency offset is associated with respective CG configurations of one cell group.

In some embodiments, in a case where the first list is associated with CG configurations of one BWP, the frequency offset associated with the m-th CG configuration in the first list is related to an index of the m-th CG configuration; or
in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or
in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

In some embodiments, one frequency offset is associated with one TB cross-slot PUCCH transmission configuration; or one frequency offset is associated with one TB cross-slot PUSCH transmission configuration.

In some embodiments, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

In some embodiments, the first information is carried in a Radio Resource Control (RRC) signaling; the RRC signaling is used to configure the first uplink transmission; or
the first information is carried in a media access control-control element (MAC CE); or
the first information is carried in downlink control information (DCI).

In some embodiments, the first information is carried in any information element (IE) of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

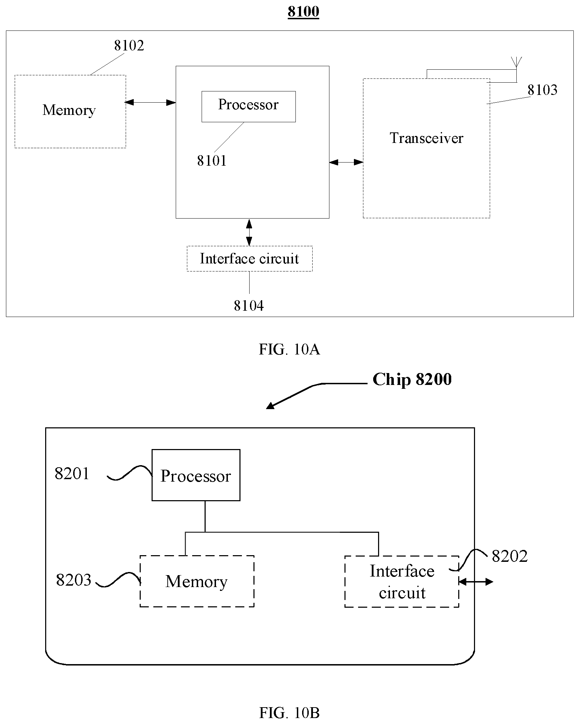

FIG. 10A is a block diagram of a communication device 8100 according to embodiments of the present disclosure. The communication device 8100 may be a network device (for example, an access network device, a core network device, etc.), or may be a terminal (for example, a user equipment, etc.), or may be a chip, a chip system, or a processor, etc. that supports the network device in implementing any one of the above methods, or may be a chip, a chip system, or a processor, etc. that supports the terminal in implementing any one of the above methods. The communication device 8100 may be used to implement the methods described in the above method embodiments. For details, reference may be made to the description in the above method embodiments.

As shown in FIG. 10A, the communication device 8100 includes one or more processors 8101. The processor 8101 may be a general-purpose processor or a dedicated processor, such as, a baseband processor and a central processing unit. The baseband processor may be used for processing communication protocols and communication data. The central processing unit may be used for controlling the communication device (e.g., a base station, a baseband chip, a terminal, a terminal chip, a DU, or a CU), executing programs, and processing data of the programs. Optionally, the communication device 8100 is configured to implement any one of the above methods. Optionally, the one or more processors 8101 is configured to invoke instructions to cause the communication device 8100 to implement any one of the above methods.

In some embodiments, the communication device 8100 further includes one or more transceivers 8103. When the communication device 8100 includes one or more transceivers 8103, the transceiver 8103 implements at least one of communication steps such as sending and/or receiving (e.g., S2101, S2102, which is not limited herein) in the above methods, and the processor 8101 implements other steps, which is not limited herein. In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 8100 further includes one or more memories 8102 for storing instructions. Optionally, all or part of the memory 8102 may also be located outside the communication device 8100. In some embodiments, the communication device 8100 may include one or more interface circuits 8104. Optionally, the interface circuit 8104 is connected to the memory 8102, and the interface circuit 8104 may be used to receive signals from the memory 8102 or other apparatuses, and may be used to send the signals to the memory 8102 or other apparatuses. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 is not limited by FIG. 10A. The communication device may be an independent device or may be part of a larger device. For example, the communication device may be: (1) an independent integrated circuit (IC), or a chip, or a chip system or subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 10B is a block diagram of a chip 8200 according to embodiments of the present disclosure. For the case where the communication device 8100 is a chip or a chip system, reference may be made to the block diagram of the chip 8200 shown in FIG. 10B, which is not limited herein.

The chip 8200 includes one or more processors 8201, and the chip 8200 is configured to implement any one of the above methods.

In some embodiments, the chip 8200 further includes one or more interface circuits 8202. Optionally, terms such as interface circuit, interface, and transceiver pins may be interchangeable with each other. In some embodiments, the chip 8200 further includes one or more memories 8203 for storing data. Optionally, all or part of the memory 8203 may be located outside the chip 8200. Optionally, the interface circuit 8202 is connected to the memory 8203, and the interface circuit 8202 may be used to receive data from the memory 8203 or other apparatuses, and may be used to send data to the memory 8203 or other apparatuses. For example, the interface circuit 8202 may read data stored in the memory 8203 and send the data to the processor 8201.

In some embodiments, the interface circuit 8202 implements at least one of communication steps such as sending and/or receiving (e.g., S2101, or S2102, which is not limited herein) in the above methods. The interface circuit 8202 implements communication steps such as sending and/or receiving in the above method, for example, referring to the data exchange between the processor 8201, chip 8200, memory 8203, or transceivers. In some embodiments, the processor 8201 performs at least one of the other steps.

The modules and/or devices described in various embodiments such as virtual devices, physical devices, chips, etc. may be combined or separated arbitrarily according to the situation. Optionally, some or all of the steps may also be executed collaboratively by multiple modules and/or devices, which is not limited here.

The present disclosure further provides a storage medium storing instructions. When the instructions are executed on the communication device 8100, the communication device 8100 implements any one of the above methods. Optionally, the storage medium is an electronic storage medium. Optionally, the storage medium is a computer-readable storage medium, which is not limited herein, and may also be a storage medium readable by other apparatuses. Optionally, the storage medium may be a non-transitory storage medium, which is not limited herein, and may also be a transitory storage medium.

The present disclosure further provides a program product. When the program product is executed by the communication device 8100, the communication device 8100 implements any one of the above methods. Optionally, the program product is a computer program product.

The present disclosure further provides a computer program that, when executed on a computer, causes the computer to implement any one of the above methods.

The present disclosure further provides a computer program that, when executed on a computer, causes the computer to implement any one of the above uplink transmission processing methods.

After considering the specification and practicing the application disclosed herein, those skilled in the art will easily come up with other embodiments of the application. This disclosure is intended to cover any variations, uses, or adaptations of the present application that follow the general principles of the present application and include common knowledge or customary technical means in the art that are not disclosed in this disclosure. The specification and embodiments are only considered exemplary, and the true scope and spirit of the application are indicated by the following claims.

It should be understood that the present application is not limited to the precise structure described above and shown in the accompanying drawings, and various modifications and changes can be made without departing from its scope. The scope of the present application is limited only by the appended claims.

## Claims

1. An uplink transmission processing method, performed by a terminal, comprising:
sending a first uplink transmission on an uplink (UL) subband of a subband full duplex (SBFD) time unit.

2. The method of claim 1, wherein the first uplink transmission comprises at least one of:
an uplink transmission corresponding to a configured grant (CG) configuration; or
a transmission block (TB) uplink transmission over multiple slots.

3. The method of claim 2, wherein one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

4. The method of claim 3, wherein the uplink transmission corresponding to the CG configuration comprises an uplink grant (ULgrant) transmission for extended reality (XR).

5. The method of any one of claims 1 to 4, wherein the SBFD time unit comprises at least one of:
a downlink (DL) time unit configured with the UL subband; or
a flexible (F) time unit configured with the UL subband.

6. The method of any one of claims 1 to 5, wherein sending the first uplink transmission on the UL subband of the SBFD time unit comprises at least one of:
in a case where a transmission occasion of the first uplink transmission is located within the UL subband of the SBFD time unit, sending the first uplink transmission at the transmission occasion; or
in a case where a transmission occasion of the first uplink transmission is located outside the UL subband of the SBFD time unit, shifting the transmission occasion in a frequency domain to a first position within the UL subband, and sending the first uplink transmission at the first position within the UL subband.

7. The method of any one of claims 1 to 6, wherein before sending the first uplink transmission, the method further comprises: receiving first information sent by a network device; wherein the first information is at least configured to determine whether to send the first uplink transmission on the UL subband of the SBFD time unit.

8. The method of claim 7, wherein the first information comprises at least one of:
a first indication, configured to indicate whether the UL subband of the SBFD time unit can be used to send the first uplink transmission; or
a second indication, configured to indicate a frequency domain offset; wherein the frequency domain offset is configured for the terminal to shift the transmission occasion in the frequency domain when the terminal uses the UL subband of the SBFD time unit to send the first uplink transmission.

9. The method of claim 8, wherein the first indication corresponds to a bit map; one bit in the bit map is associated with at least one uplink transmission configuration of the first uplink transmission.

10. The method of claim 9, wherein the uplink transmission configuration comprises a CG configuration;
one bit in the bitmap is associated with an index of one CG configuration.

11. The method of claim 10, wherein the index of the CG configuration comprises:
a first index, wherein one first index is applied to one bandwidth part (BWP);
a second index, wherein one second index is applied to a media access control (MAC) entity.

12. The method of claim 10 or 11, wherein bits of the bit map from high to low correspond to indexes of the CG configurations from small to large; or the bits of the bitmap from high to low correspond to the indexes of the CG configurations from large to small.

13. The method of claim 9, wherein the uplink transmission configuration comprises at least one of:
a TB cross-slot PUCCH transmission configuration; or
a TB cross-slot PUSCH transmission configuration.

14. The method of claim 13, wherein
one bit in the bit map is associated with respective uplink transmission configurations of one BWP; or
one bit in the bit map is associated with respective uplink transmission configurations of one serving cell; or
one bit in the bit map is associated with respective uplink transmission configurations of one cell group; or
one bit in the bit map is associated with one uplink transmission configuration.

15. The method of claim 14, wherein
in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration;
in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

16. The method of claim 8, wherein the first indication comprises:
a BWP identifier, configured to indicate that the first uplink transmission associated with the BWP identifier can be sent using the UL subband of the SBFD time unit;
a cell identifier, configured to indicate that the first uplink transmission associated with the cell identifier can be sent using the UL subband of the SBFD time unit.

17. The method of any one of claims 8 to 16, wherein
the second indication corresponds to a first list; the first list comprises one or more frequency offsets.

18. The method of claim 17, wherein
one frequency offset is associated with an index of one CG configuration; or
one frequency offset is associated with respective CG configurations of one BWP; or
one frequency offset is associated with respective CG configurations of one serving cell; or
one frequency offset is associated with respective CG configurations of one cell group.

19. The method of claim 17, wherein
in a case where the first list is associated with CG configurations of one BWP, the frequency offset associated with the m-th CG configuration in the first list is related to an index of the m-th CG configuration; or
in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or
in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

20. The method of claim 17, wherein one frequency offset is associated with one TB cross-slot PUCCH transmission configuration; or one frequency offset is associated with one TB cross-slot PUSCH transmission configuration.

21. The method of claim 20, wherein, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

22. The method of any one of claims 7 to 21, wherein
the first information is carried in a Radio Resource Control (RRC) signaling; the RRC signaling is used to configure the first uplink transmission; or
the first information is carried in a media access control-control element (MAC CE); or
the first information is carried in downlink control information (DCI).

23. The method of any one of claims 7 to 22, wherein the first information is carried in any information element (IE) of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

24. An uplink transmission processing method, performed by a network device, comprising:
receiving a first uplink transmission on an uplink (UL) subband of a subband full duplex (SBFD) time unit.

25. The method of claim 24, wherein the first uplink transmission comprises at least one of:
an uplink transmission corresponding to a configured grant (CG) configuration; or
a transmission block (TB) uplink transmission over multiple slots.

26. The method of claim 25, wherein one CG configuration corresponds to one CG occasion or a plurality of periodically distributed CG occasions; one CG occasion is configured on one slot; or
one CG configuration corresponds to one CG occasion or a plurality of periodically distributed CG occasions; one CG occasion is configured on a plurality of continuously distributed slots; or
one CG configuration corresponds to one CG occasion or a plurality of periodically distributed CG occasions; different CG occasions are configured on different slots, and the plurality of CG occasions are configured on a plurality of continuously distributed slots.

27. The method of claim 26, wherein the uplink transmission corresponding to the CG configuration comprises an uplink grant (ULgrant) transmission for extended reality (XR).

28. The method of any one of claims 24 to 27, wherein the SBFD time unit comprises at least one of:
a downlink (DL) time unit configured with the UL subband; or
a flexible (F) time unit configured with the UL subband.

29. The method of any one of claims 24 to 28, wherein receiving the first uplink transmission on the UL subband of the SBFD time unit comprises at least one of:
in a case where a transmission occasion of the first uplink transmission is located within the UL subband of the SBFD time unit, receiving the first uplink transmission at the transmission occasion; or
in a case where a transmission occasion of the first uplink transmission is located outside the UL subband of the SBFD time unit, shifting the transmission occasion in a frequency domain to a first position within the UL subband, and receiving the first uplink transmission at the first position within the UL subband.

30. The method of any one of claims 24 to 29, wherein before receiving the first uplink transmission, the method further comprises: sending first information to a terminal; wherein the first information is at least configured to determine whether to send the first uplink transmission on the UL subband of the SBFD time unit.

31. The method of claim 30, wherein the first information comprises at least one of:
a first indication, configured to indicate whether the UL subband of the SBFD time unit can be used to send the first uplink transmission; or
a second indication, configured to indicate a frequency domain offset; wherein the frequency domain offset is configured for the terminal to shift the transmission occasion in the frequency domain when the terminal uses the UL subband of the SBFD time unit to send the first uplink transmission.

32. The method of claim 31, wherein the first indication corresponds to a bit map; one bit in the bit map is associated with at least one uplink transmission configuration of the first uplink transmission.

33. The method of claim 32, wherein the uplink transmission configuration comprises a CG configuration;
one bit in the bitmap is associated with an index of one CG configuration.

34. The method of claim 33, wherein the index of the CG configuration comprises:
a first index, wherein one first index is applied to one bandwidth part (BWP);
a second index, wherein one second index is applied to a media access control (MAC) entity.

35. The method of claim 33 or 34, wherein bits of the bit map from high to low correspond to indexes of the CG configurations from small to large; or the bits of the bitmap from high to low correspond to the indexes of the CG configurations from large to small.

36. The method of claim 32, wherein the uplink transmission configuration comprises at least one of:
a TB cross-slot PUCCH transmission configuration; or
a TB cross-slot PUSCH transmission configuration.

37. The method of claim 36, wherein
one bit in the bit map is associated with respective uplink transmission configurations of one BWP; or
one bit in the bit map is associated with respective uplink transmission configurations of one serving cell; or
one bit in the bit map is associated with respective uplink transmission configurations of one cell group; or
one bit in the bit map is associated with one uplink transmission configuration.

38. The method of claim 37, wherein, in a case where one bit in the bit map is associated with one uplink transmission configuration and the bit map is associated with a plurality of BWPs, the bit associated with the n-th uplink transmission configuration in the bit map is related to a BWP identifier of a BWP where the n-th uplink transmission configuration is located and an index of the n-th uplink transmission configuration;
in a case where one bit in the bit map is associated with one uplink transmission configuration and the bit map is associated with a plurality of cells, the bit associated with the n-th uplink transmission configuration in the bit map is related to a cell identifier of a cell where the n-th uplink transmission configuration is located, a BWP identifier of a BWP where the n-th uplink transmission configuration is located, and an index of the n-th uplink transmission configuration.

39. The method of claim 31, wherein the first indication comprises:
a BWP identifier, configured to indicate that the first uplink transmission associated with the BWP identifier can be sent using the UL subband of the SBFD time unit;
a cell identifier, configured to indicate that the first uplink transmission associated with the cell identifier can be sent using the UL subband of the SBFD time unit.

40. The method of any one of claims 31 to 39, wherein
the second indication corresponds to a first list; the first list comprises one or more frequency offsets.

41. The method of claim 40, wherein
one frequency offset is associated with an index of one CG configuration; or
one frequency offset is associated with respective CG configurations of one BWP; or
one frequency offset is associated with respective CG configurations of one serving cell; or
one frequency offset is associated with respective CG configurations of one cell group.

42. The method of claim 40, wherein
in a case where the first list is associated with CG configurations of one BWP, the frequency offset associated with the m-th CG configuration in the first list is related to an index of the m-th CG configuration; or
in a case where the first list is associated with CG configurations of a plurality of BWPs, the frequency offset associated with the m-th CG configuration in the first list is related to an index of the m-th CG configuration and a BWP identifier of a BWP where the m-th CG configuration is located; or
in a case where the first list is associated with CG configurations of a plurality of cells, the frequency offset associated with the m-th CG configuration in the first list is related to an index of the m-th CG configuration, a cell identifier of a cell where the m-th CG configuration is located, and a BWP identifier of a BWP where the m-th CG configuration is located.

43. The method of claim 40, wherein one frequency offset is associated with one TB cross-slot PUCCH transmission configuration; or one frequency offset is associated with one TB cross-slot PUSCH transmission configuration.

44. The method of claim 43, wherein, in a case where the first list is associated with TB cross-slot PUCCH transmission configurations of one BWP, the frequency offset associated with the xth TB cross-slot PUCCH transmission configuration in the first list is related to an index of the xth TB cross-slot PUCCH transmission configuration; or
in a case where the first list is associated with TB cross-slot PUSCH transmission configurations of one BWP, the frequency offset associated with the y-th TB cross-slot PUSCH transmission configuration in the first list is related to an index of the y-th TB cross-slot PUSCH transmission configuration; or
in a case where the first list is associated with TB cross-slot PUCCH transmission configurations of a plurality of BWPs, the frequency offset associated with the x-th TB cross-slot PUCCH transmission configuration in the first list is related to an index of the x-th TB cross-slot PUCCH transmission configuration and a BWP identifier of a BWP where the x-th TB cross-slot PUCCH transmission configuration is located; or
in a case where the first list is associated with TB cross-slot PUSCH transmission configurations of a plurality of BWPs, the frequency offset associated with the y-th TB cross-slot PUSCH transmission configuration in the first list is related to an index of the y-th TB cross-slot PUSCH transmission configuration and a BWP identifier of a BWP where the y-th TB cross-slot PUSCH transmission configuration is located; or
in a case where the first list is associated with TB cross-slot PUCCH transmission configurations of a plurality of cells, the frequency offset associated with the x-th TB cross-slot PUCCH transmission configuration in the first list is related to an index of the x-th TB cross-slot PUCCH transmission configuration, a cell identifier of a cell where the x-th TB cross-slot PUCCH transmission configuration is located, and a BWP identifier of a BWP where the x-th TB cross-slot PUCCH transmission configuration is located; or
in a case where the first list is associated with TB cross-slot PUSCH transmission configurations of a plurality of cells, the frequency offset associated with the y-th TB cross-slot PUSCH transmission configuration in the first list is related to an index of the y-th TB cross-slot PUSCH transmission configuration, a cell identifier of a cell where the y-th TB cross-slot PUSCH transmission configuration is located, and a BWP identifier of a BWP where the y-th TB cross-slot PUSCH transmission configuration is located.

45. The method of any one of claims 30 to 44, wherein
the first information is carried in a Radio Resource Control (RRC) signaling; the RRC signaling is used to configure the first uplink transmission; or
the first information is carried in a media access control-control element (MAC CE); or
the first information is carried in downlink control information (DCI).

46. The method of any one of claims 30 to 45, wherein the first information is carried in any information element (IE) of:
ConfiguredGrantConfig IE;
BWP-UplinkDedicated IE;
CellGroupConfig IE;
MAC-CellGroupConfig IE;
ServingCellConfig IE;
PUSCH-Config IE;
PUCCH-Config IE;
DMRS-BundlingPUSCH-Config IE;
DMRS-BundlingPUCCH-Config IE.

47. A terminal, comprising:
a sending module, configured to send a first uplink transmission on an uplink (UL) subband of a subband full duplex (SBFD) time unit.

48. A network device, comprising:
a receiving module, configured to receive a first uplink transmission on an uplink (UL) subband of a subband full duplex (SBFD) time unit.

49. A communication device, comprising:
one or more processors,
wherein the processor is configured to invoke instructions to cause the communication device to implement the uplink transmission processing method of any one of claims 1 to 23 and/or claims 24 to 46.

50. A storage medium storing instructions that, when executed on a communication device, cause the communication device to implement the uplink transmission processing method of any one of claims 1 to 23 and/or claims 24 to 46.
